# EUROPEAN PATENT APPLICATION

(11) **EP 1 811 360 A1**
(43) Date of publication of application: **25.07.2007**
(21) Application number: 05770409.0
(22) Date of filing: 09.08.2005
(51) Int. Cl.: G06F 3/033, G06F 3/041, B60R 11/02, G06F 3/14, G06F 3/048

(54) **INPUT DEVICE**

(30) Priority: 03.09.2004 JP 2004257649
(71) Applicant: MATSUSHITA ELECTRIC INDUSTRIAL CO., LTD., Osaka 571-8501 (JP)
(72) Inventor: HIRAI, Takuya Mat. Elec. Ind. Co., Ltd., IPROC, Osaka-shi, Osaka 540-6319 (JP); IISAKA, Atsushi Mat. Elec. Ind. Co., Ltd., IPROC, Osaka-shi, Osaka 540-6319 (JP); YAMASHITA, Atsushi Mat. Elec. Ind. Co., Ltd., IPROC, Osaka-shi, Osaka 540-6319 (JP)
(74) Representative: Pautex Schneider, Nicole Véronique
(86) International application number: PCT/JP2005/014594
(87) International publication number: WO 2006/027924

(57) **Abstract**

An operation touch pad (4) is disposed near the hand of a user. On a display (2), there is displayed one or more GUI parts (3) for the user to input a desired instruction or information. When the user touches the touch pad (4) by a hand (6) so as to select the GUI parts (3), the touch pad (4) outputs contact position data indicating the area of contact with the hand (6) . An image (7) of a hand shape model is generated from the contact position data outputted from the touch pad (4) and is displayed on the display (2). In view of the image (7) displayed on the display (2), the user moves the hand (6) so that the finger tip of the model may come to over the desired GUI parts (3), and then pushes the touch pad (4).

## Description

### TECHNICAL FIELD

The present invention relates to an input device for the user to input an instruction or information to an apparatus, and more specifically, relates to an input device with which the user can input an instruction or information by use of a body part such as a hand based on information displayed on a display or the like.

### BACKGROUND ART

An example of conventional input devices for the user to input an instruction or information by use of a finger or the like of his/hers based on information displayed on the display screen of a display or the like is a touch panel display. The touch panel display has a structure that a touch panel is provided on the display screen of a display. The GUI (graphical user interface) displayed on the screen includes display parts (hereinafter, referred to as GUI parts) typified by menus and button switches. By touching a desired GUI part, the user can input the instruction or the information associated with the GUI part. As described above, by using the touch panel display, an instruction or information can be inputted easily and intuitively, so that an input interface can be realized that is easy to operate for persons who are unfamiliar with the input operation. For this reason, the touch panel display is widely adopted toATMs (automatic teller machines) at banks and car navigation systems.

On the other hand, examples of input interfaces with which the user use can make input not by touching the display screen like the touch panel display but by using an operation unit situated away from the display screen include a touch tracer and a tablet generally used as an input device for PCs (personal computer) (for example, see Patent Document 1). On these input interfaces, a cursor of a shape such as an arrow is displayed on the display screen, and when the user moves his/her finger or a pen while making it in contact with a predetermined operation surface provided on the operation unit, the cursor on the screen moves in response to the movement. By performing a predetermined entering operation (for example, clicking operation) after confirming that the cursor has been moved onto a desired GUI part, the user can input the instruction or the information associated with the GUI part.

Further, an input interface is available in which a movement of a hand or the like of the user is detected by use of a camera and the cursor displayed on the screen is moved in response to the movement without the user directly touching the operation surface like the touch panel display and the tablet (for example, see Patent Document 2) . In this case, when the user moves his/her hand in the air in a direction in which he/she intends to move the cursor displayed on the screen within the visual field of the camera, the cursor on the screen moves in response to the movement. By performing a predetermined entering operation (for example, making a fist) after confirming that the cursor has been moved onto a desired GUI part, the user can input the instruction or the information associated with the GUI part.
[Patent Document 1] Japanese Laid-Open Patent Application No. H11-3169
[Patent Document 2] Japanese Laid-Open Patent Application No. 2000-181601

### DISCLOSURE OF THE INVENTION

### PROBLEMS TO BE SOLVED BY THE INVENTION

However, the conventional interfaces as described above have the following defects:

In the touch panel display, since input is made by directly touching the display screen, a kind of dilemma occurs with respect to the installation position of the display screen.

For the user to touch the touch panel display with a finger of his/hers, it is necessary to install the display screen near his/her body. Human engineering provides the optimum installation condition for input interfaces associated with the operation of VDTs (video display terminals), and a radius of 50 centimeters or less from the body is determined to be favorable.

On the other hand, there are cases where it is desirable to install the display screen as far as possible. Examples thereof include large-screen televisions installed in houses and car navigation systems installed in cars. It is undesirable to the eyes to watch television from a short distance of approximately 30 centimeters. For car navigation systems used during driving, it is reported that the time required for the focal length of the driver' s eyes to be adjusted interrupts the attention to the driving. That is, the smaller the difference between the focal length (several meters ahead) during driving and the focal length when the display screen of the car navigation system is seen is, the higher the safety is. While a far-focus display typified by an HUD (head up display) using a lens or a mirror is present as a display device where the focal length when the display screen is seen can be increased, since the user cannot touch the display screen in this far-focus display, the touch panel cannot be applied thereto.

Further, the touch panel display has an intrinsic problem that the fingerprints left on the display screen by users' input operations degrade the viewability of the display.

On the other hand, in the touch tracer and the tablet, since the display screen and the operation unit are separated, it is possible to place the display screen far and place the operation unit in proximity. Since the user never touches the screen, there is no worry that fingerprints are left on the screen.

However, with the input interface in which the display screen and the operation unit are separated, since it is necessary to slide a finger or a pen on the operation surface of the operation unit to move the cursor displayed on the screen, a desired GUI part cannot be selected with a single touch unlike the touch display panel. That is, since it is necessary to move the cursor onto the desired GUI part by sliding a finger on the operation surface after confirming the current position of the cursor, quick input like that with the touch panel display is difficult. As described above, the input interface in which the display screen and the operation surface are separated is inferior in operability to the touch panel display since intuitive input like that with the touch panel display is impossible.

In the method of detecting a movement of the hand by use of a camera as described above, quick input like that with the touch panel display is also difficult since it is necessary to move the cursor onto the desired GUI part by moving the hand in the air like the examples of the touch tracer and the tablet. Further, the necessity for the user to move the hand in the air readily results in fatigue.

When a camera is used as mentioned above, it is considered to detect not a "movement (that is, a relative position change) " of the finger but the orientation of the user's finger and detect the "position" on the display screen to which the user points, from the orientation. However, when a person points to a distant object, it is very rare that the object that the user intends to point to is situated at the point to which the user points because of the influence of the parallax due to the positions of the eyes. Therefore, the position on the display screen to which the user points cannot be accurately identified only from the orientation of the finger. In addition, since it is necessary for the user to move his/her hand in the air, the position of the hand is unstable, so that the accuracy of the input is low.

Accordingly, an object of the present invention is to provide an input device capable of intuitively and accurately making input even when the display screen and the operation unit are separated.

### SOLUTION TO THE PROBLEMS

To achieve the above object, the present invention adopts the following structures. The reference characters, the figure numbers, and the auxiliary explanation within the parentheses show the correspondence with the figures to provide assistance in understanding the present invention, and does not limit the scope of the present invention.

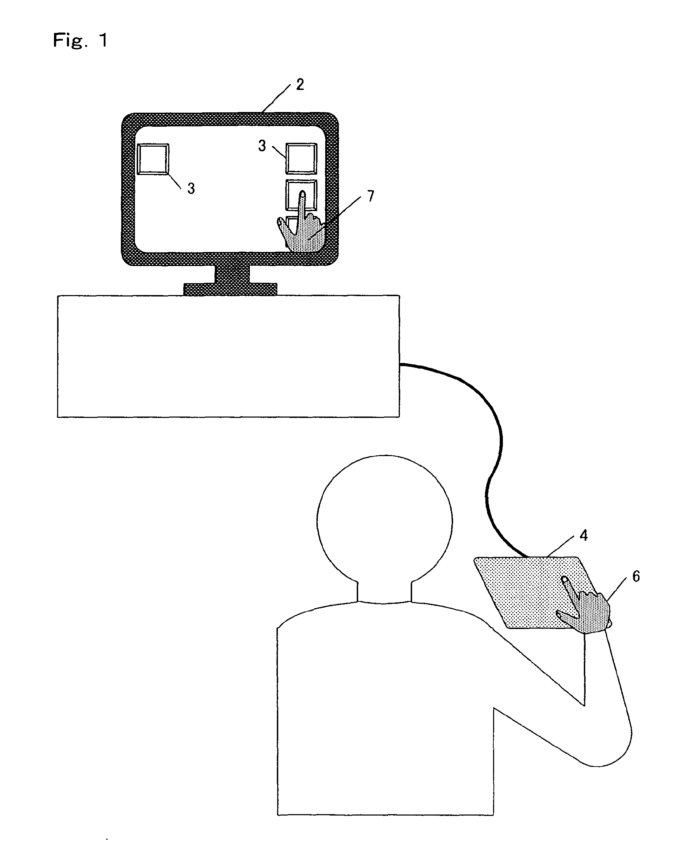

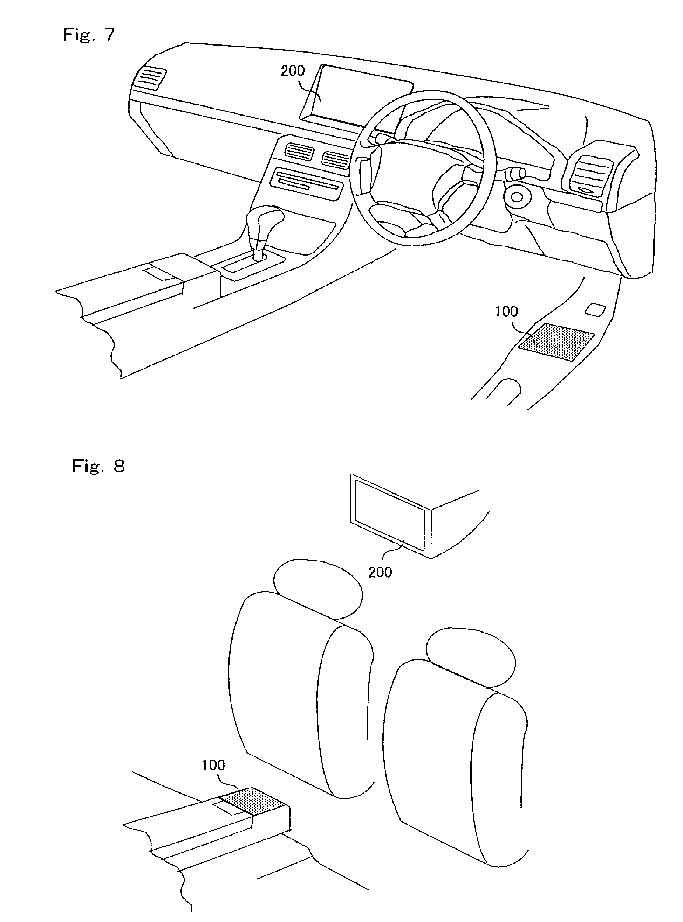

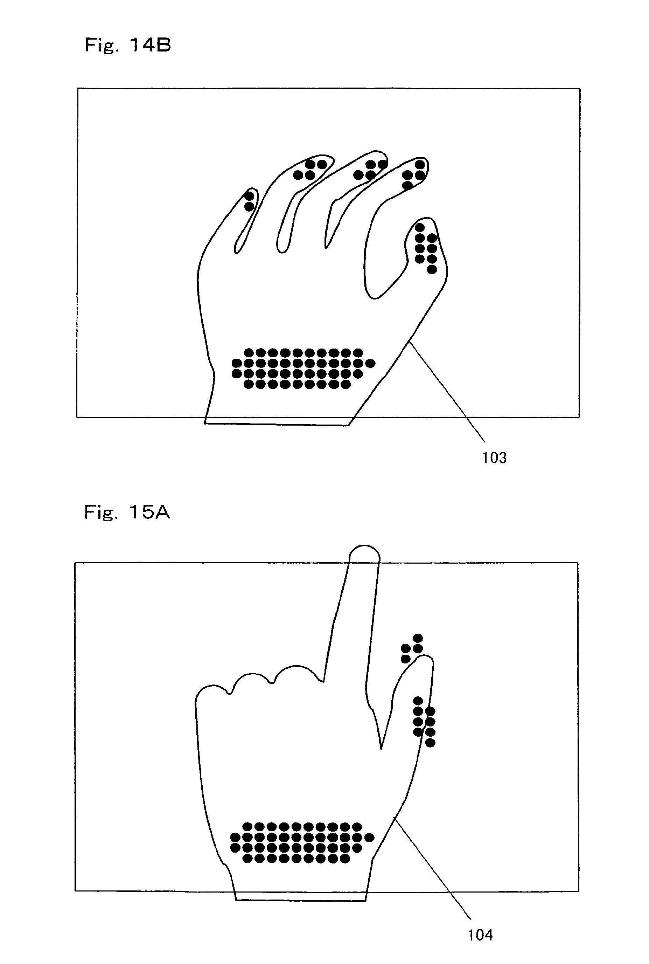

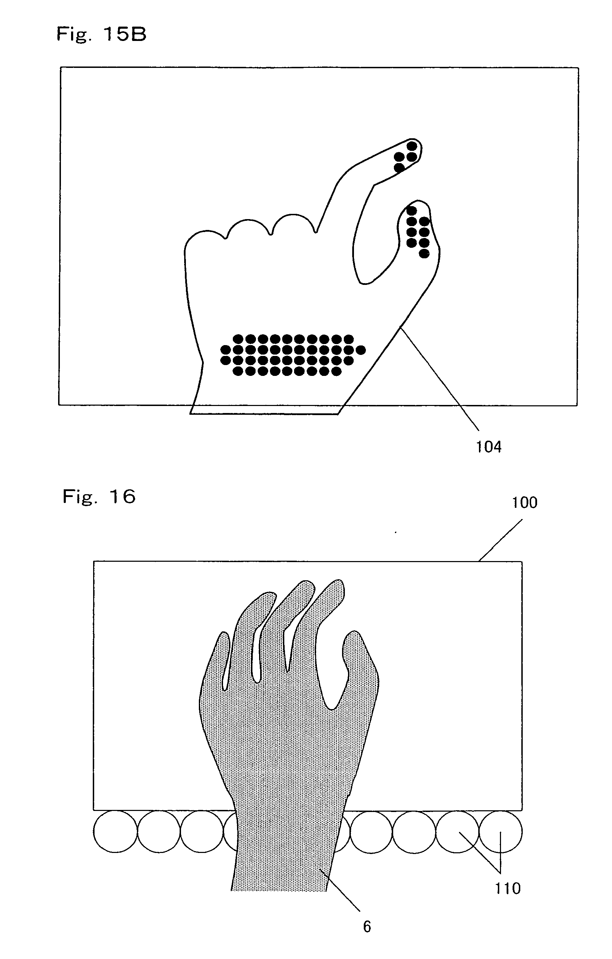

A first aspect of the present invention is an input device provided with: a detecting unit (4, 100) that has an operation surface, detects an area in contact with or close to a body part (6) of a user on the operation surface, and outputs contact position data (150A, 150B) indicating the area; an operation content determining unit (500) that detects a specific input operation (pushing operation, etc.) by the user based on the contact position data; a body position displaying unit (600) that forms a contact area image (FIG. 10B,FIG. 11B,FIG. 12B, FIG. 13B, 103 of FIG. 14B, 104 of FIG. 15B, 7 of FIG. 1) corresponding to the area in contact with or close to the body part of the user on the operation surface of the detecting unit, based on the contact position data; a display information creating unit (700) that creates a display image that assists the user in performing an operation; an image combining unit (800) that combines the contact area image formed by the body position displaying unit and the display image created by the display information creating unit with each other; and a displaying unit (2, 200) that displays the image obtained by the combination by the image combining unit.

A second aspect of the present invention is an aspect according to the first aspect in which the detecting unit is a contact type coordinate input device (for example, a touch panel or a touch pad).

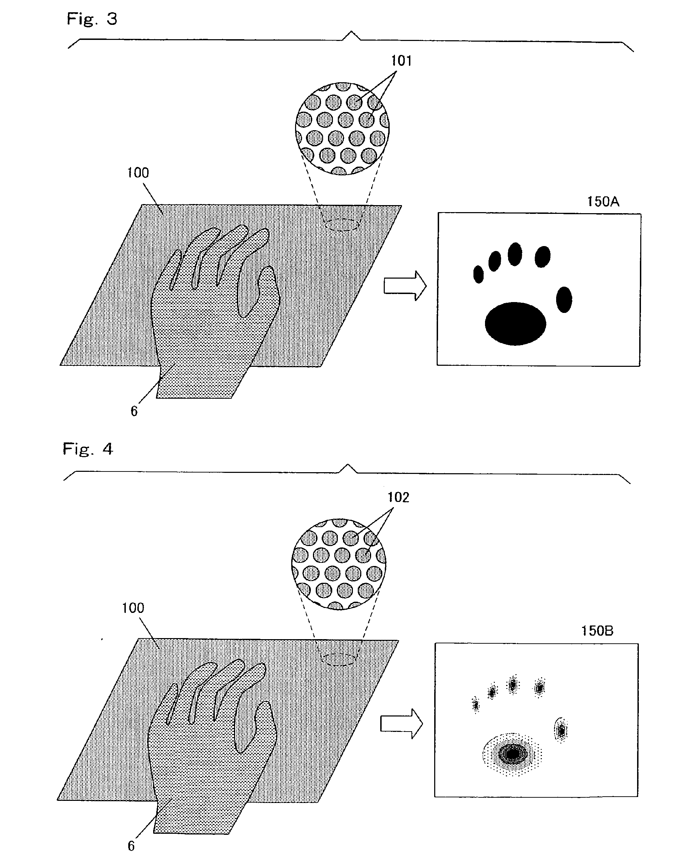

A third aspect of the present invention is an aspect according to the first aspect in which the detecting unit includes a plurality of capacitive sensors (101) arranged along the operation surface (FIG. 3). Thereby, not only the contact but also the approach of the body part of the user can be detected according to the setting of the capacitive sensors, so that the user can lightly perform the input operation and the condition at the time of the approach can be determined through the displaying unit.

A fourth aspect of the present invention is an aspect according to the third aspect in which the body position displaying unit forms a contact area image (FIG. 10B) comprising dots corresponding to the capacitive sensors of the detecting unit. This lightens the load of the processing to form the contact area image. Moreover, since it is found which capacitive sensors detect the contact of the body part of the user, a finer and accurate input operation is made possible.

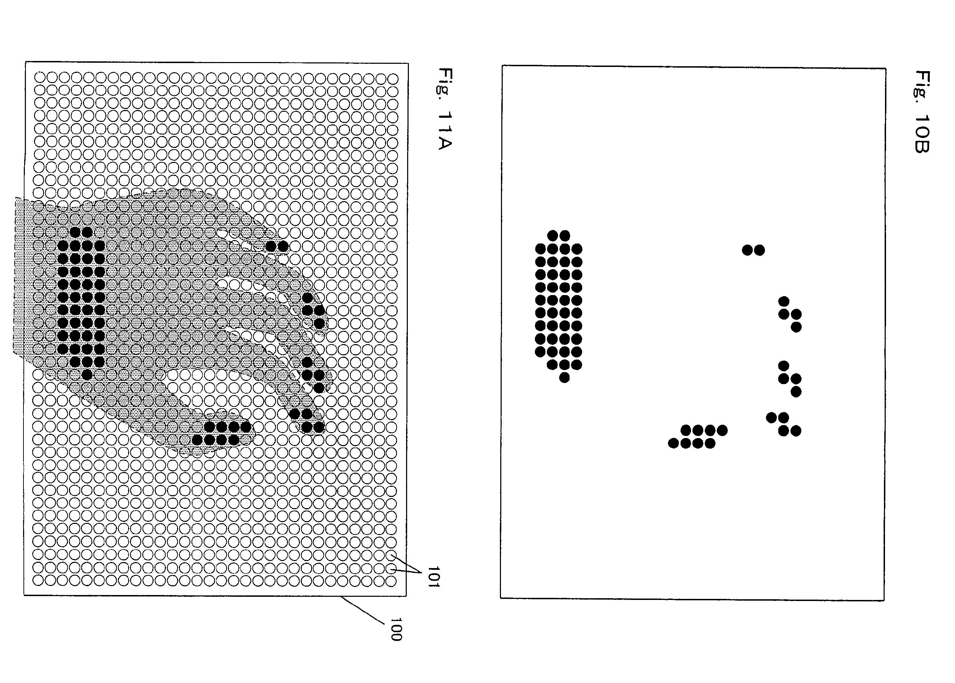

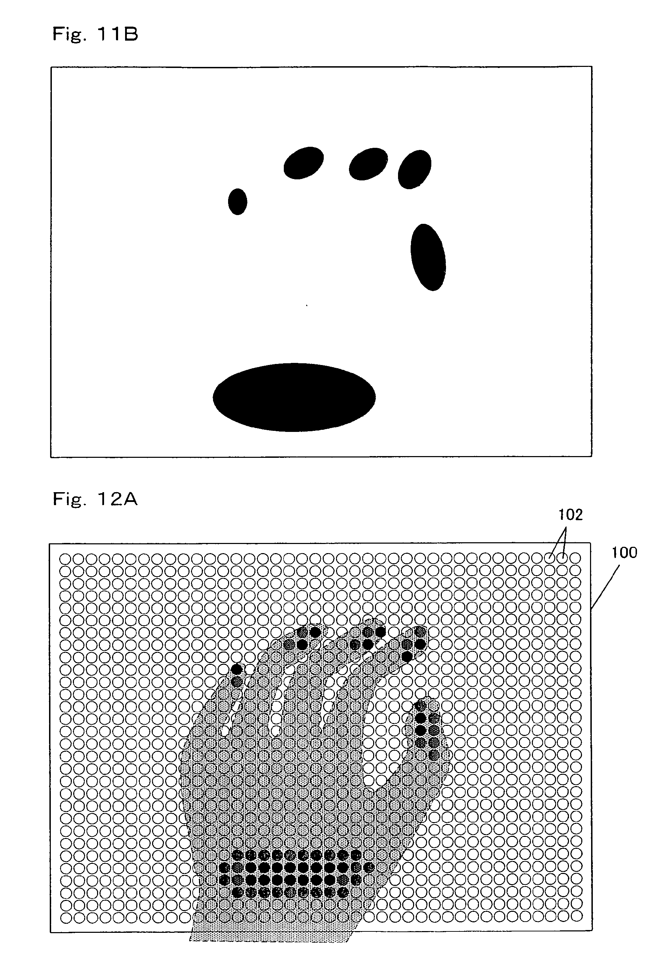

A fifth aspect of the present invention is an aspect according to the third aspect in which the body position displaying unit forms a contact area image (FIG. 11B) comprising, of dots corresponding to the capacitive sensors of the detecting unit, adjoining dots approximated to one figure. This enables the user to intuitively grasp the shape of the contact area, which causes little discomfort.

A sixth aspect of the present invention is an aspect according to the first aspect in which the detecting unit includes a plurality of pressure sensors (102) arranged along the operation surface (FIG. 4). This enables input operations such as touching, lightly pressing, and strongly pressing to be easily distinguished from one another when detected, based on the detection values of the pressure sensors, so that the user can easily perform various input operations.

A seventh aspect of the present invention is an aspect according to the sixth aspect in which the contact position data includes pressure values detected by the pressure sensors of the detecting unit (150B), and the body position displaying unit forms a contact area image corresponding to the pressure values detected by the pressure sensors of the detecting unit, based on the contact position data. Thereby, the degree of the pressure applied to each point of the operation surface can be presented to the user.

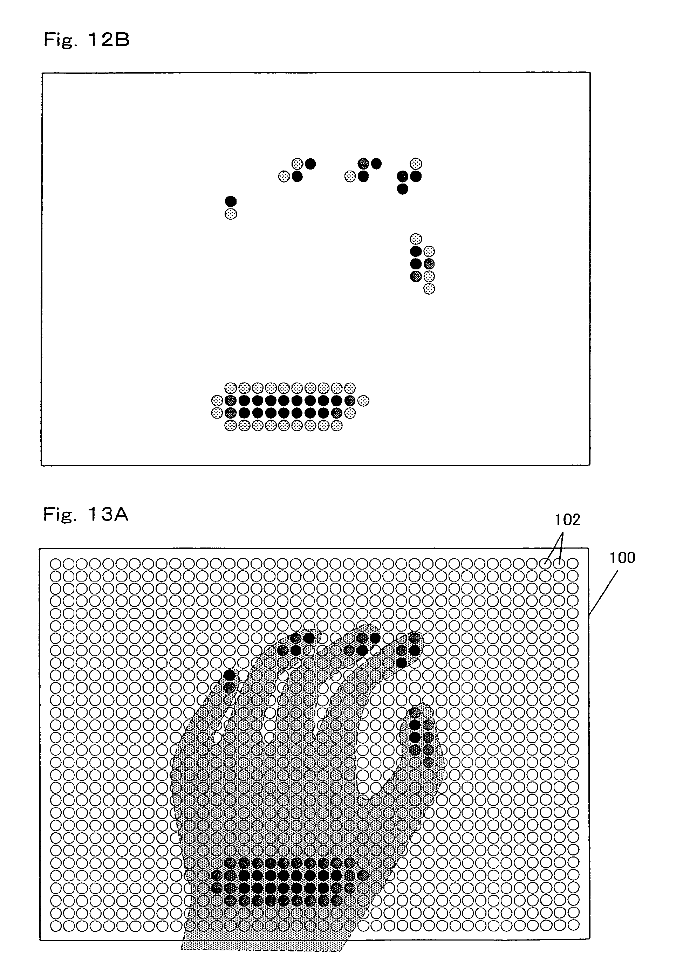

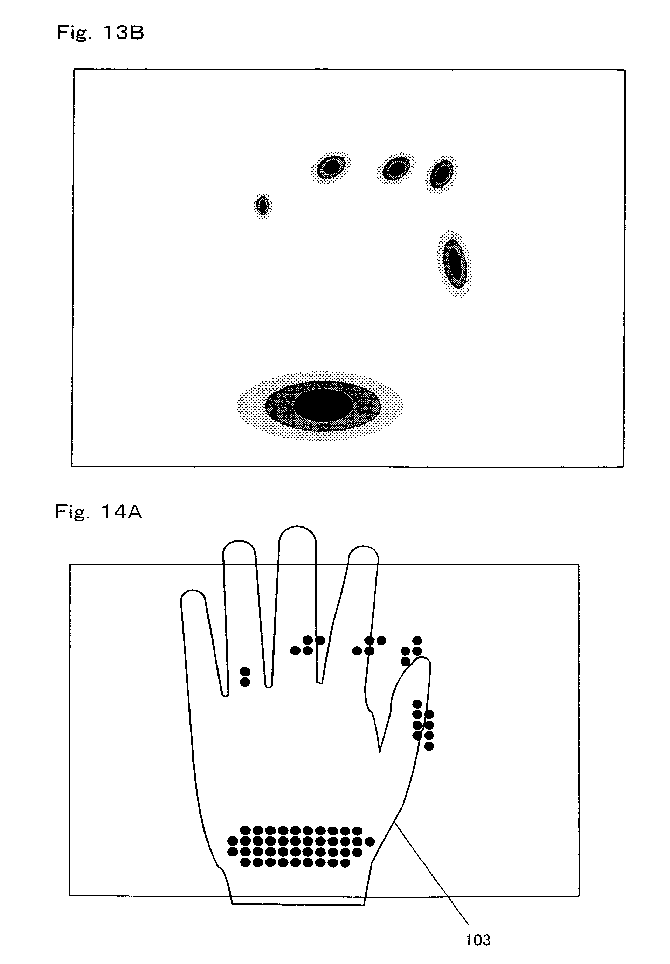

An eighth aspect of the present invention is an aspect according to the seventh aspect in which colors of parts of the contact area image formed by the body position displaying unit are varied according to the pressure values detected by the pressure sensors of the detecting unit (FIG. 12B, FIG. 13B). Thereby, the degree of the pressure applied to each point of the operation surface can be presented to the user with the color.

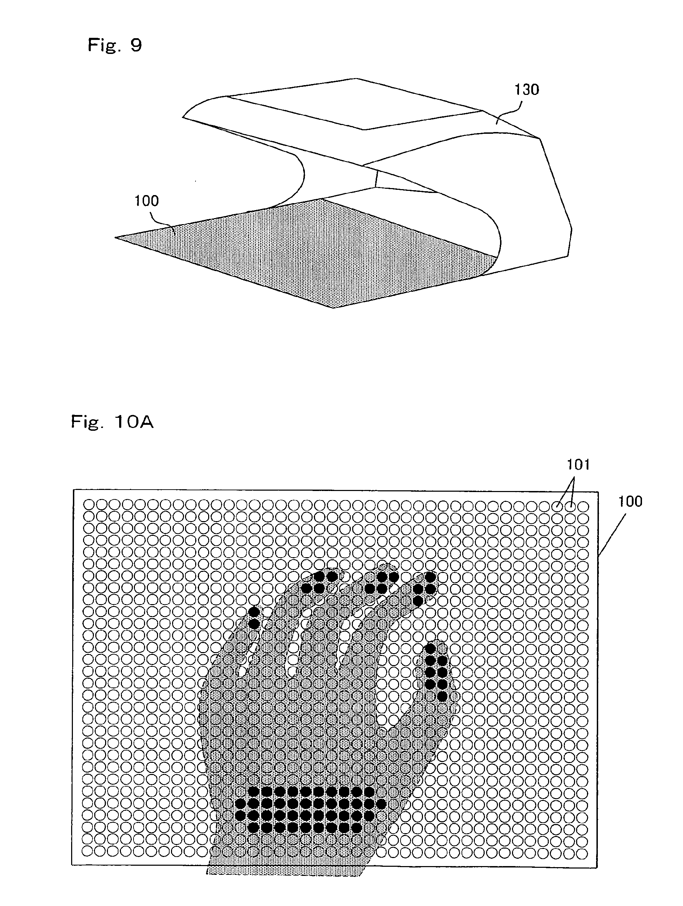

A ninth aspect of the present invention is an aspect according to the first aspect further provided with a covering unit (FIG. 9, 130) that covers the operation surface of the detecting unit. Thereby, a failure caused by an object dropping onto the operation surface of the detecting unit can be avoided.

A tenth aspect of the present invention is an aspect according to the first aspect in which the body position displaying unit performs modeling of a shape of the body part of the user placed on the operation surface of the detecting unit based on a previously held body shape pattern (103 of FIG. 14A, 104 of FIG. 15A) and the contact position data outputted from the detecting unit, and forms an image (7) of a body shape model (103 of FIG. 14A, 104 of FIG. 15A) obtained as a result of the modeling, as the contact area image. Thereby, since the shape of the hand of the user placed on the operation surface of the detecting unit is displayed on the displaying unit, an input operation as if to directly touch the screen is made possible.

An eleventh aspect of the present invention is an aspect according to the tenth aspect in which the body position displaying unit performs a calibration processing to obtain a characteristic (the length of each finger, etc.) of the body part of the user based on the contact position data outputted from the detecting unit, and performs the modeling of the shape of the body part of the user based on a result of the calibration processing. Thereby, more accurate modeling is made possible.

A twelfth aspect of the present invention is an aspect according to the tenth aspect further provided with a non-contact type position detecting sensor such as an infrared sensor (110) near the detecting unit (FIG. 16). Thereby, more accurate modeling is made possible.

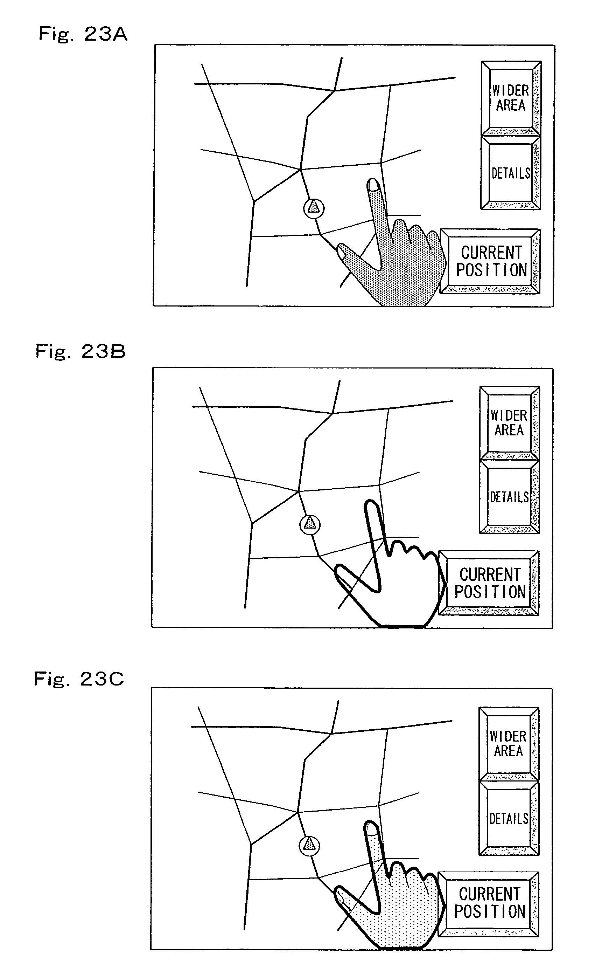

A thirteenth aspect of the present invention is an aspect according to the tenth aspect in which the image combining unit combines only an outline of the body shape mode with the display image created by the display information creating unit (FIG. 23B) . Thereby, it can be avoided that the display information is hidden by displaying the body shape model.

A fourteenth aspect of the present invention is an aspect according to the tenth aspect in which the image combining unit changes transparency of the body shape model when the contact area image formed by the body position displaying unit and the display image formed by the body information creating unit are combined with each other (FIG. 23C) . Thereby, it can be avoided that the display information is hidden by displaying the body shape model.

A fifteenth aspect of the present invention is an aspect according to the tenth aspect in which the image combining unit highlights an outline of the body shape model when the contact area image formed by the body position displaying unit and the display image formed by the body information creating unit are combined with each other (FIG. 23C) . Thereby, the body shape model can be displayed clearly.

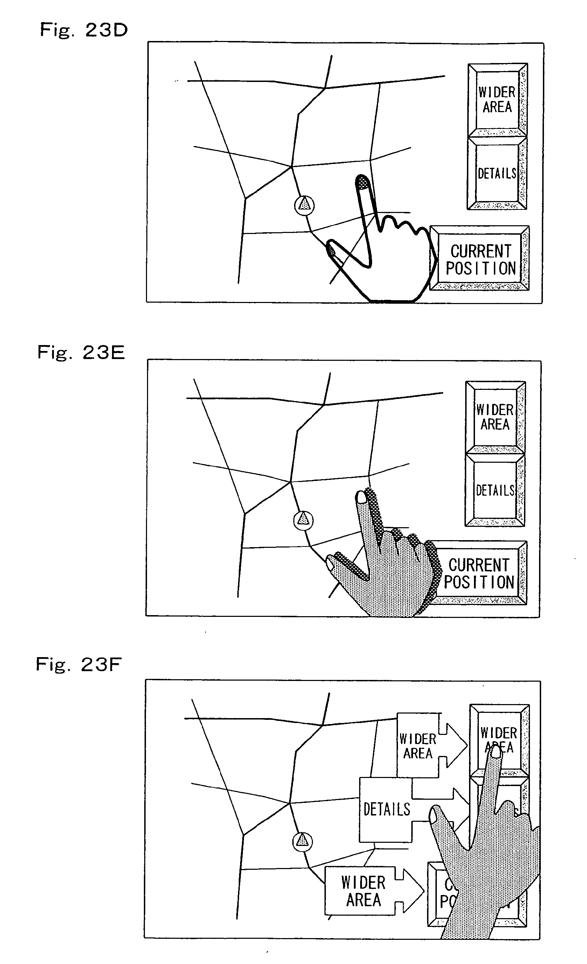

A sixteenth aspect of the present invention is an aspect according to the tenth aspect in which the image combining unit highlights a part of a fingertip of the body shape model when the contact area image formed by the body position displaying unit and the display image formed by the body information creating unit are combined with each other (FIG. 23D). Thereby, the current position of the part of the fingertip largely associated with the input operation can be presented to the user in an easy-to-see manner, so that operability is improved.

A seventeenth aspect of the present invention is an aspect according to the sixteenth aspect in which the detecting unit includes a sensor group comprising a plurality of capacitive sensors (101) or pressure sensors (102) arranged along the operation surface, and the image combining unit highlights the part of the fingertip of the body shape model by use of an image (FIG. 10B, FIG. 12B) comprising dots corresponding to the sensors of the sensor group when the contact area image formed by the body position displaying unit and the display image formed by the body information creating unit are combined with each other. Thereby, since it is found which sensors detect the contact of the body part of the user, a finer and accurate input operation is made possible.

An eighteenth aspect of the present invention is an aspect according to the sixteenth aspect in which the detecting unit includes a sensor group comprising a plurality of capacitive sensors or pressure sensors arranged along the operation surface, and the image combining unit highlights the part of the fingertip of the body shape model by use of an image (FIG. 11B, FIG. 13B) comprising, of dots corresponding to the sensors of the sensor group, adjoining dots approximated to one figure when the contact area image formed by the body position displaying unit and the display image formed by the body information creating unit are combined with each other. Thereby, a smooth contact area image with little unnaturalness can be displayed.

A nineteenth aspect of the present invention is an aspect according to the tenth aspect in which the image combining unit pop-up displays display information in the display image hidden by the body shape model, in an area not hidden by the body shape model when the contact area image formed by the body position displaying unit and the display image formed by the body information creating unit are combined with each other (FIG. 23F). This enables the user to also confirm the display information hidden by displaying the body shape model.

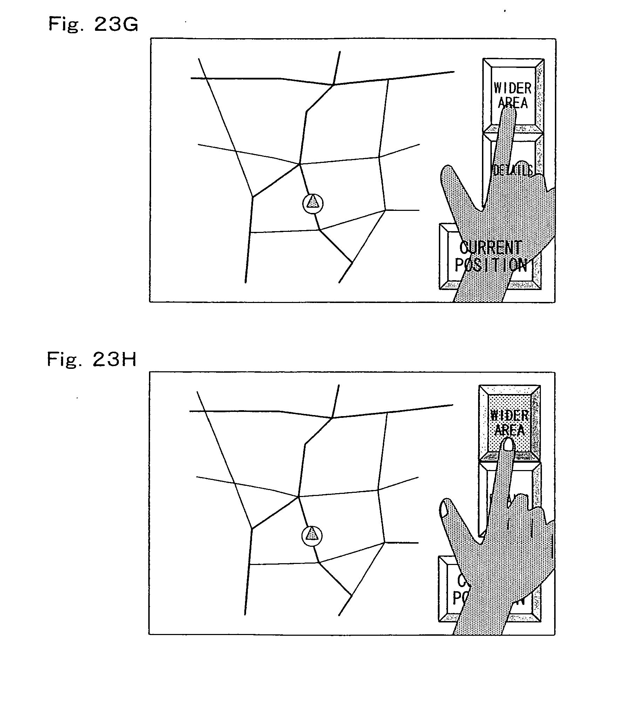

A twelfth aspect of the present invention is an aspect according to the tenth aspect in which the image combining unit displays display information in the display image hidden by the body shape model in front of the body shape model when the contact area image formed by the body position displaying unit and the display image formed by the body information creating unit are combined with each other (FIG. 23G). This enables the user to also confirm the display information hidden by displaying the body shape model.

A twenty-first aspect of the present invention is an aspect according to the tenth aspect in which the image combining unit highlights display information in the display image overlapping a part of a fingertip of the body shape model when the contact area image formed by the body position displaying unit and the display image formed by the body information creating unit are combined with each other (FIG. 23H). This enables the user to easily confirm which is the display information corresponding to the position of his/her fingertip.

A twenty-second aspect of the present invention is an aspect according to the twenty-first aspect in which the image combining unit highlights the display information, in the display image, overlapping the part of the fingertip by enlarging the display information, changing a color of the display information (FIG. 23H), or by changing the display information so as to look stereoscopic. This enables the user to easily confirm which is the display information corresponding to the current position of his/her fingertip.

A twenty-third aspect of the present invention is an aspect according to the first aspect in which the display information creating unit changes a display image to be formed, according to the contact position data outputted from the detecting unit. Thereby, appropriate display information can be created according to the circumstances.

A twenty-fourth aspect of the present invention is an aspect according to the twenty-third aspect further provided with a controlling unit (400) that determines whether the body part of the user is in contact with or close to the operation surface of the detecting unit based on the contact position data outputted from the detecting unit, and the display information creating unit forms the display image only when the controlling unit determines that the body part of the user is in contact with or close to the operation surface of the detecting unit based on the contact position data outputted from the detecting unit. Thereby, power consumption can be suppressed by not performing the image display processing when the body part is not detected.

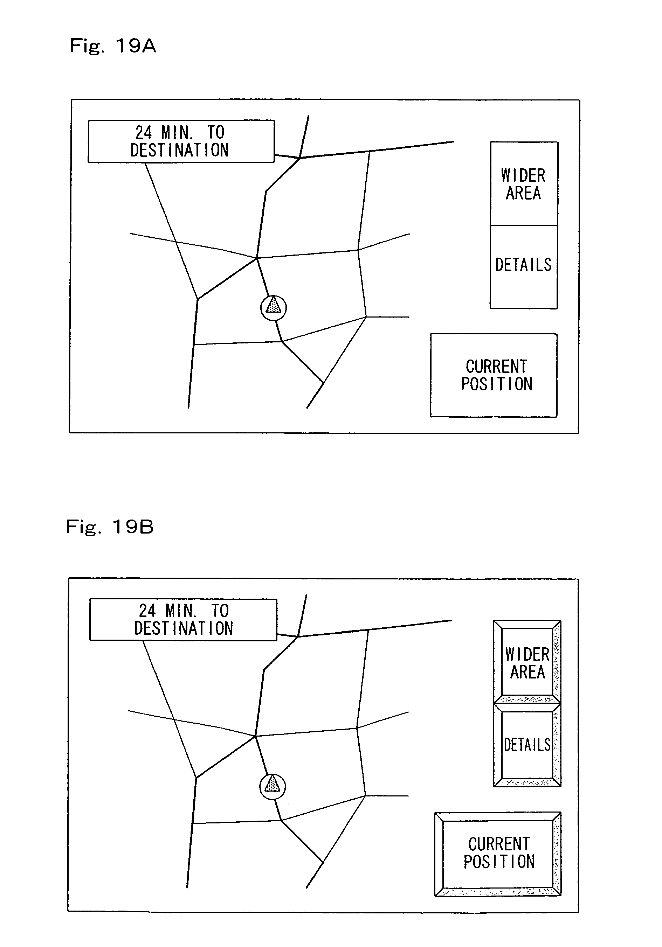

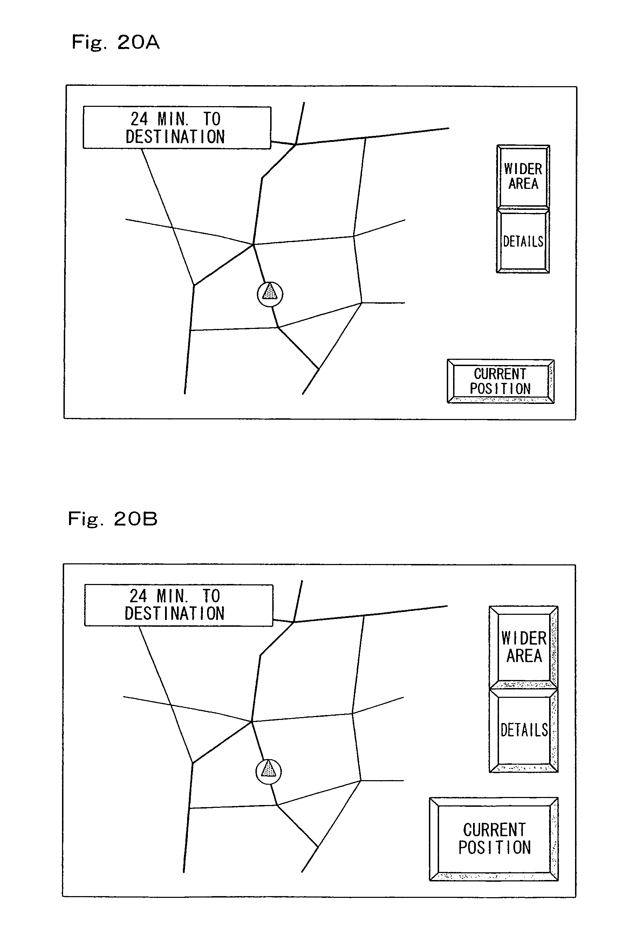

A twenty-fifth aspect of the present invention is an aspect according to the twenty-third aspect further provided with a controlling unit (400) that determines whether the body part of the user is in contact with or close to the operation surface of the detecting unit based on the contact position data outputted from the detecting unit, and the display information creating unit highlights a GUI part in the display image to be formed, when the controlling unit determines that the body part of the user is in contact with or close to the operation surface of the detecting unit based on the contact position data outputted from the detecting unit (FIG. 19B, FIG. 20B). Thereby, when the body part is not detected, by inconspicuously displaying the GUI part, the display information other than the GUI part can be made easy to view and the information amount thereof can be increased.

A twenty-sixth aspect of the present invention is an aspect according to the first aspect further provided with character detecting means (400, 600) for detecting a character of the body part of the user in contact with or close to the operation surface of the detecting unit based on the contact position data outputted from the detecting unit, and the display information creating unit changes the display image to be formed, according to the characteristic of the body part of the user detected by the character detecting means. Thereby, appropriate display information can be created according to the characteristic of the body part of the user.

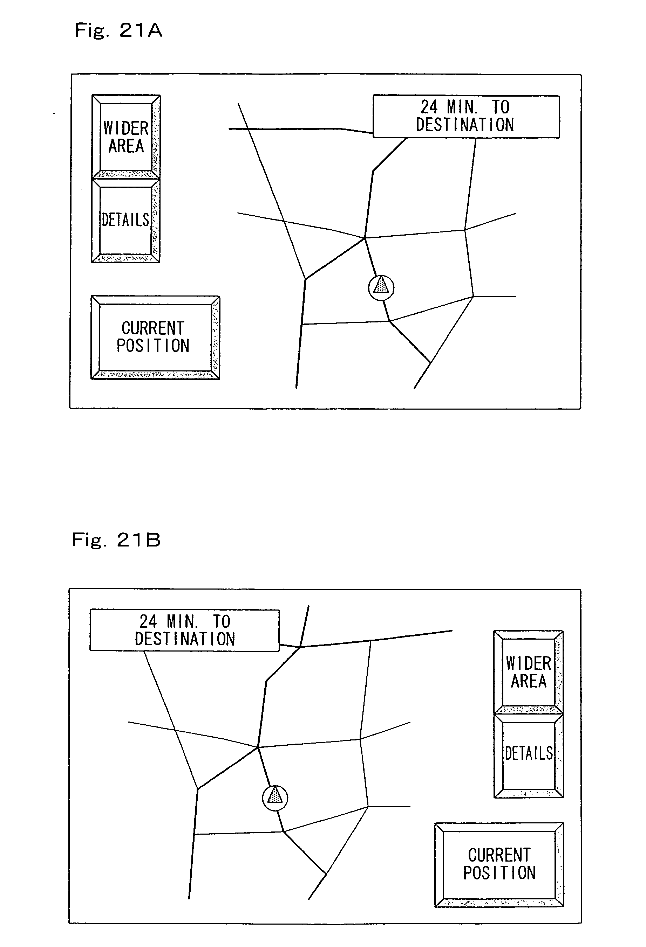

A twenty-seventh aspect of the present invention is an aspect according to the twenty-sixth aspect in which the character detecting means determines whether the body part of the user in contact with or close to the operation surface of the detecting unit is a right hand or a left hand based on the contact position data outputted from the detecting unit, and the display information creating unit changes the display image to be formed, according to a result of the determination by the character detecting means (FIG. 21A, FIG. 21B). Thereby, appropriate display information can be created according to whether the body part of the user is a right hand or a left hand.

A twenty-eighth aspect of the present invention is an aspect according to the twenty-seventh aspect in which the display information creating unit creates display information only when the body part of the user in contact with or close to the operation surface of the detecting unit is a right hand or a left hand. This enables, for example, the following: The display information is displayed only when the user is performing the input operation from the right side of the detecting unit, and the display information is displayed only when the user is performing the input operation from the left side of the detecting unit.

A twenty-ninth aspect of the present invention is an aspect according to the twenty-seventh aspect in which the display information creating unit highlights a GUI part in the display image to be formed, change a position of the GUI part (FIG. 21A, FIG. 21B), or changes validity of the GUI part when the body part of the user in contact with or close to the operation surface of the detecting unit is a right hand or a left hand. This enables the following: The GUI part is highlighted, the GUI part is validated, or it is indicated that the GUI part is invalidated only when the user is performing the input operation from the right side (or the left side) of the detecting unit. Moreover, the position of the GUI part can be changed to a position where the input operation is easily performed, according to the position of the user.

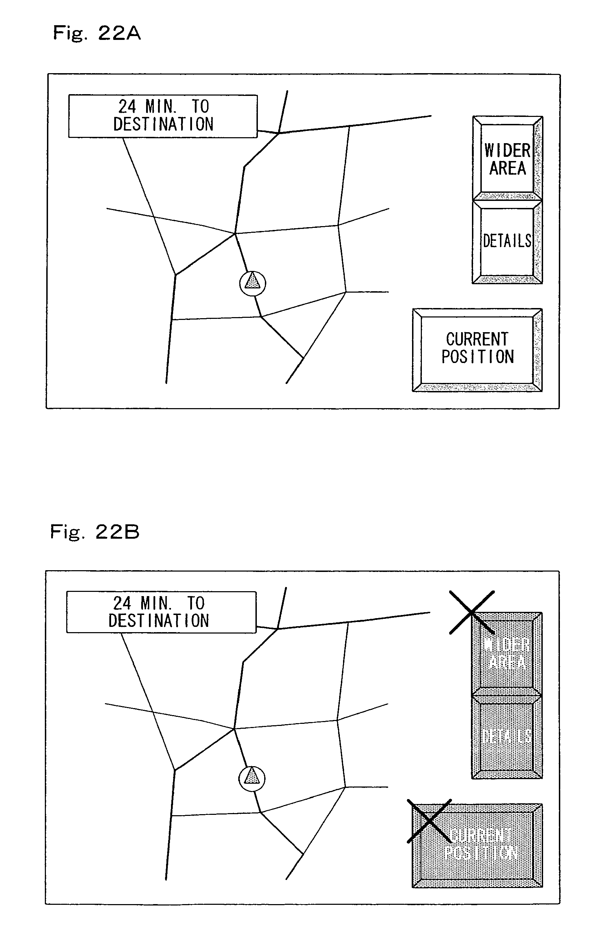

A thirtieth aspect of the present invention is an aspect according to the twenty-sixth aspect in which the character detecting means determines whether the body part of the user in contact with or close to the operation surface of the detecting unit is a body part of an adult or a body part of a child based on the contact position data outputted from the detecting unit, and the body position displaying unit changes the display image to be formed, according to a result of the determination by the character detecting means (FIG. 22A, FIG. 22B). Thereby, appropriate display information can be created according to whether the body part of the user is a body part of an adult or a body part of a child.

A thirty-first aspect of the present invention is an aspect according to the thirtieth aspect in which the display information creating unit creates display information only when the body part of the user in contact with or close to the operation surface of the detecting unit is a body part of an adult or a body part of a child. This enables, for example, the following: The display information is displayed only when the user is an adult, or the display information is displayed only when the user is a child.

A thirty-second aspect of the present invention is an aspect according to the thirtieth aspect in which the display information creating unit highlights a GUI part in the display image to be formed, change a position of the GUI part, or changes validity of the GUI part when the body part of the user in contact with or close to the operation surface of the detecting unit is a body part of an adult or a body part of a child. This enables the following: The GUI part is highlighted, the GUI part is validated (FIG. 22A), or it is indicated that the GUI part is invalidated only when the user is an adult (or a child) . Moreover, the position of the GUI part can be changed to a position where the input operation is easily performed, according to whether the user is an adult or a child.

A thirty-third aspect of the present invention is an aspect according to the first aspect in which the input device has two operation modes: a mode in which an input operation by the user is enabled and a mode in which the input operation by the user is disabled, and in the mode in which the input operation by the user is enabled, the image combining unit displays the display image formed by the display information creating unit as it is, on the displaying unit without combining the display image with the contact area image. Thereby, when the mode in which the input operation by the user is disabled is set, this can be indicated to the user.

A thirty-fourth aspect of the present invention is an aspect according to the first aspect in which the input device has two operation modes: a mode in which an input operation by the user is enabled and a mode in which the input operation by the user is disabled, and the image combining unit changes a method of combining the display image formed by the display information creating unit and the contact area image with each other, according to the operation mode. Thereby, for example, when the mode in which the input operation by the user is disabled, this can be displayed on the screen.

A thirty-fifth aspect of the present invention is an aspect according to the thirty-fourth aspect in which the image combining unit combines the display image and the contact area image so that the contact area image is displayed semitransparently, is displayed with its outline highlighted, or is displayed semitransparently with its outline highlighted in the mode in which the input operation by the user is enabled, and so that the contact area image is displayed opaquely in the mode in which the input operation by the user is disabled. Thereby, when the mode in which the input operation by the user is disabled is set, this can be indicated to the user.

A thirty-sixth aspect of the present invention is an aspect according to the first aspect in which the displaying unit is a projector that projects an image onto a screen. Even when display means that cannot be directly touched is used like this, an intuitive input operation can be performed.

A thirty-seventh aspect of the present invention is a vehicle provided with: a detecting unit (4, 100) that has an operation surface, detects an area in contact with or close to a body part (6) of a user on the operation surface, and outputs contact position data (150A, 150B) indicating the area; an operation content determining unit (500) that detects a specific input operation (pushing operation, etc.) by the user based on the contact position data; a body position displaying unit (600) that forms a contact area image (FIG. 10B, FIG. 11B, FIG. 12B, FIG. 13B, 103 of FIG. FIG. 14B, 104 of FIG. 15B, 7 of FIG. 1) corresponding to the area in contact with or close to the body part of the user on the operation surface of the detecting unit, based on the contact position data; a display information creating unit (700) that creates a display image that assists the user in performing an operation; an image combining unit (800) that combines the contact area image formed by the body position displaying unit and the display image created by the display information creating unit with each other; and a displaying unit (2, 200) that displays the image obtained by the combination by the image combining unit. Thereby, the driver and passengers can perform the input operation without directly touching the screen, so that the input operation is easy. In particular, when the driver performs the input operation while driving, since the input operation can be reliably performed without the hand being looked at, the movement amount of the visual point is suppressed, so that safety is ensured.

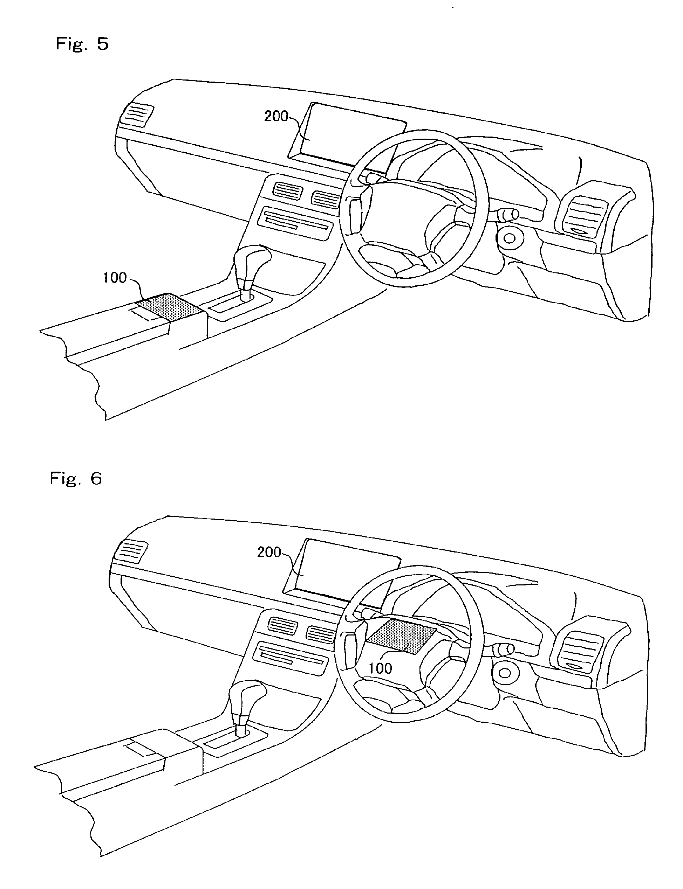

A thirty-eighth aspect of the present invention is an aspect according to the thirty-seventh aspect in which the detecting unit is installed on a left side or a right side of a driver seat, and installed in a position where a driver can operate the detecting unit with his/her elbow on an arm rest (FIG. 5, FIG. 7).
This enables the driver to perform the input operation in a comfortable position.

A thirty-ninth aspect of the present invention is an aspect according to the thirty-seventh aspect in which the detecting unit is installed on a steering (FIG. 6) . Thereby, since the steering and the detecting unit are close to each other, the input operation can be quickly performed also during driving.

A fortieth aspect of the present invention is an aspect according to the thirty-seventh aspect in which the detecting unit is installed in a center of a rear seat (FIG. 8). This enables passengers on the rear seat to perform the input operation.

### EFFECT OF THE INVENTION

By the present invention as described above, to which position on the screen the position on the operation surface that the body part of the user is in contact with (or close to) corresponds can be accurately grasped, so that even when the display screen and the detecting unit are separated from each other, an intuitive and accurate input operation as if to make input while directly touching the screen like a touch panel is enabled.

### BRIEF DESCRIPTION OF THE DRAWINGS

[FIG. 1] FIG. 1 is a conceptual view of an input device according to an embodiment of the present invention.
[FIG. 2] FIG. 2 is a block diagram showing the structure of the input device.
[FIG. 3] FIG. 3 shows an example of contact position data outputted from a detecting unit 100 when capacitive sensors 101 are used in the detecting unit 100.
[FIG. 4] FIG. 4 shows an example of the contact position data outputted from the detecting unit 100 when pressure sensors 102 are used in the detecting unit 100.
[FIG. 5] FIG. 5 shows an example of the installation of the input device in a car.
[FIG. 6] FIG. 6 shows an example of the installation of the input device in a car.
[FIG. 7] FIG. 7 shows an example of the installation of the input device in a car.
[FIG. 8] FIG. 8 shows an example of the installation of the input device in a car.
[FIG. 9] FIG. 9 shows an example in which a covering unit 130 is provided so as to cover the detecting unit 100.
[FIG. 10A] FIG. 10A shows an example of the contact position data when the capacitive sensors 101 are used in the detecting unit 100.
[FIG. 10B] FIG. 10B shows an example of a contact area image when the capacitive sensors 101 are used in the detecting unit 100.
[FIG. 11A] FIG. 11A is an example of the contact position data when the capacitive sensors 101 are used in the detecting unit 100.
[FIG. 11B] FIG. 11B shows an example of the contact area image when the capacitive sensors 101 are used in the detecting unit 100.
[FIG. 12A] FIG. 12A is an example of the contact position data when the pressure sensors 102 are used in the detecting unit 100.
[FIG. 12B] FIG. 12B shows an example of the contact area image when the pressure sensors 102 are used in the detecting unit 100.
[FIG. 13A] FIG. 13A is an example of the contact position data when the pressure sensors 102 are used in the detecting unit 100.
[FIG. 13B] FIG. 13B shows an example of the contact area image when the pressure sensors 102 are used in the detecting unit 100.
[FIG. 14A] FIG. 14A shows an example of a prepared hand shape model 103.
[FIG. 14B] FIG. 14B shows an example of the hand shape model 103 the shape of which is changed based on the contact position data.
[FIG. 15A] FIG. 15A shows an example of a prepared hand shape model 104.
[FIG. 15B] FIG. 15B shows an example of the hand shape model 104 the shape of which is changed based on the contact position data.
[FIG. 16] FIG. 16 shows an example in which infrared sensors 110 are provided near the detecting unit 100.
[FIG. 17] FIG. 17 shows an example of a specific input operation by the user.
[FIG. 18] FIG. 18 is a sequence diagram showing the flow of a processing by a controlling unit 400 to display the contact area image.
[FIG. 19A] FIG. 19A shows an example of the display information created by a display information creating unit 700 when the contact area is not detected.
[FIG. 19B] FIG. 19B shows an example of the display information created by the display information creating unit 700 when the contact area is detected.
[FIG. 20A] FIG. 20A shows an example of the display information created by the display information creating unit 700 when the contact area is not detected.
[FIG. 20B] FIG. 20B shows an example of the display information created by the display information creating unit 700 when the contact area is detected.
[FIG. 21A] FIG. 21A shows an example of the display information created by the display information creating unit 700 when the right hand is detected.
[FIG. 21B] FIG. 21B shows an example of the display information created by the display information creating unit 700 when the left hand is detected.
[FIG. 22A] FIG. 22A shows an example of the display information created by the display information creating unit 700 when a comparatively large hand is detected.
[FIG. 22B] FIG. 22B shows an example of the display information created by the display information creating unit 700 when a comparatively small hand is detected.
[FIG. 23A] FIG. 23A shows an example of an image obtained by the combination by an image combining unit 800.
[FIG. 23B] FIG. 23B shows an example of the image obtained by the combination by the image combining unit 800.
[FIG. 23C] FIG. 23C shows an example of the image obtained by the combination by the image combining unit 800.
[FIG. 23D] FIG. 23D shows an example of the image obtained by the combination by the image combining unit 800.
[FIG. 23E] FIG. 23E shows an example of the image obtained by the combination by the image combining unit 800.
[FIG. 23F] FIG. 23F shows an example of the image obtained by the combination by the image combining unit 800.
[FIG. 23G] FIG. 23G shows an example of the image obtained by the combination by the image combining unit 800.
[FIG. 23H] FIG. 23H shows an example of the image obtained by the combination by the image combining unit 800.
[FIG. 24] FIG. 24 is a sequence diagram showing the flow of a processing by the controlling unit 400 when a pushing operation by the user is detected.
[FIG. 25A] FIG. 25A is an example of the display information created by the display information creating unit 700 when a pushing operation by the user is present.
[FIG. 25B] FIG. 25B is an example of the display information created by the display information creating unit 700 when a pushing operation by the user is present.

### DESCRIPTION OF THE REFERENCE CHARACTERS

- 2: display
- 3: GUI part
- 4: touch pad
- 6: operator's hand
- 7: hand shape model image
- 100: detecting unit
- 101: capacitive sensor
- 102: stress sensor
- 103: hand shape model
- 104: hand shape model
- 110: infrared sensor
- 130: covering unit
- 150A: contact position data
- 150B: contact position data
- 200: displaying unit
- 300: calculating unit
- 400: controlling unit
- 500: operation content determining unit
- 600: body position displaying unit
- 700: display information creating unit
- 800: image combining unit
- 1000: input device

### BEST MODE FOR CARRYING OUT THE INVENTION

Hereinafter, an embodiment of the present invention will be explained in detail.

FIG. 1 is a conceptual view of an input device according to the embodiment of the present invention. In FIG. 1, an operation touch pad 4 is set near a hand of the user, and a display 2 is installed in a position away from the user. One or more GUI parts 3 for the user to input a desired instruction or information are displayed on the display 2.

Points on the operation surface of the touch pad 4 correspond one to one to points on the display screen of the display 2. When the user pushes a point on the operation surface of the touch pad 4 with a finger of his/hers, data indicating the contact position is outputted from the touch pad 4 to a non-illustrated controlling unit, the GUI part 3 corresponding to the contact position is identified based on the data, and the instruction or the information associated with the GUI part 3 is inputted.

On the other hand, when the user places the hand 6 on the touch pad 4 to select a GUI part 3, the area, on the touch pad 4, in contact with the user's hand 6 (normally, the area in contact with the user's fingertip and palm) is detected by the touch pad 4, and the data indicating the contact area is transmitted from the touch pad 4 to a calculating unit. The calculating unit estimates the shape of the hand placed on the touch pad 4 from the data received from the touch pad 4, and generates an image 7 of a hand shape model based on the estimated shape. Then, the generated image 7 of the hand shape model is displayed on the display 2 by superimposition. The user pushes the touch pad 4 after moving the hand 6 so that the fingertip of the hand shape model is situated on the desired GUI part 3 while watching the hand shape model displayed on the display 2. Then, the instruction or the information associated with the GUI part 3 corresponding to the contact position (that is, the GUI part 3 situated in the position of the fingertip of the hand shape model) is inputted.

A case is assumed where the image 7 of the hand shape model is not displayed on the screen. In this case, for example, when selecting a GUI part 3 displayed in the center of the screen, the user necessarily turns his/her eyes on the operation surface of the touch pad 4 and confirms the central position of the touch pad 4 before pushing the touch pad 4 with a finger, which is inconvenient. Turning the eyes on a hand is dangerous particularly during car driving. However, according to the input device of the present invention, to which position on the screen the current position of the finger corresponds can be confirmed by watching the image 7 of the hand shape model displayed on the display 2. Thus, the user can select a GUI part 3 while watching only the display 2 without turning his/her eyes on the touch pad 4.

Hereinafter, the input device will be explained in more detail.

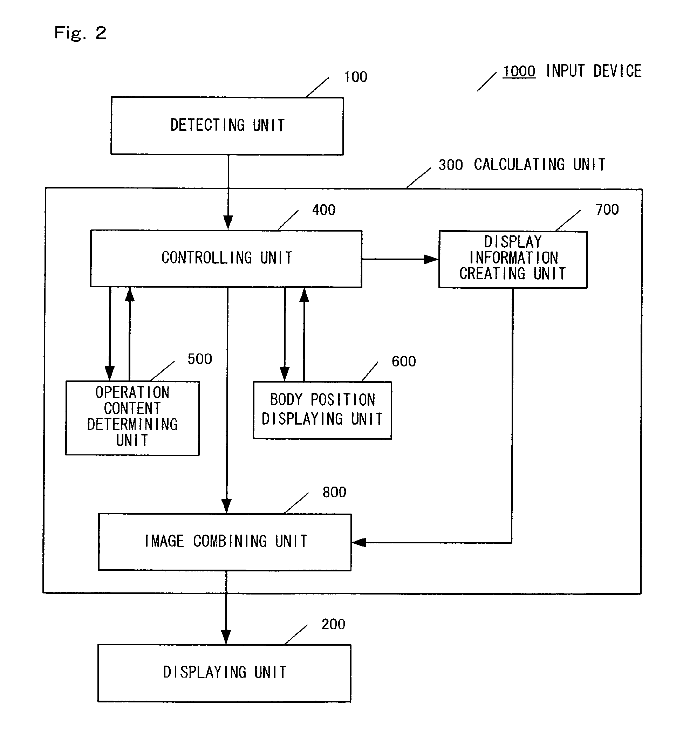

FIG. 2 is a block diagram showing the structure of the input device. In FIG. 2, the input device 1000 includes a detecting unit 100, a displaying unit 200, and a calculating unit 300. The calculating unit 300 includes: a controlling unit 400 that controls the entire calculating unit 300; an operation content determining unit 500 that detects a specific input operation by the user; a body position displaying unit 600 that forms an image indicating the area of contact of the user's body with the detecting unit 100 (for example, 7 of FIG. 1); a display information creating unit 700 that creates the display information (that is, the image including the GUI part 3) necessary for the user to input an instruction or information; and an image combining unit 800 that combines the image formed by the body position displaying unit 600 and the display information created by the display information creating unit 700 with each other. The structures of these units will be explained in detail.

### (Detecting Unit 100)

First, the detecting unit 100 will be explained.

The detecting unit 100 is means for the user to input an instruction or information by use of a body part such as a hand, and has the function of outputting data indicating the contact position when the user touches the operation surface. As the detecting unit 100, a touch panel or a touch pad can be typically used. Although typical touch panels and touch pads can detect only one contact position at the same time, the detecting unit 100 used in the present invention has the function of detecting, when the user touches a plurality of positions on the operation surface at the same time, the contact positions at the same time. Such a function is realized by two-dimensionally arranging a plurality of capacitive sensors (or pressure sensors) on the operation surface of the detecting unit 100.

FIG. 3 and FIG. 4 each show an example of the data outputted from the detecting unit 100.

FIG. 3 shows an example when a plurality of capacitive sensors are used in the detecting unit 100. In FIG. 3, in the detecting unit 100, a plurality of capacitive sensors 101 are two-dimensionally arranged along the operation surface. When a body part (in this example, the hand 6) of the user touches (or approaches) the operation surface, the capacitance between the detecting unit 100 and the body part changes, and this change is detected by the capacitive sensors 101. The detecting unit 100 outputs contact position data 150A as shown in FIG. 3 indicating the contact position of the user's bodypart on the operation surface based on the results of the detection by the capacitive sensors 101.

FIG. 4 shows an example when a plurality of pressure sensors are used in the detecting unit 100. In FIG. 4, in the detecting unit 100, a plurality of pressure sensors 102 are two-dimensionally arranged along the operation surface. When a body part (in this example, the hand 6) of the user touches the operation surface, the pressure applied to the operation surface by the body part is detected by the pressure sensors 102. The detecting unit 100 outputs contact position data 150B as shown in FIG. 4 indicating the contact position of the user's body part on the operation surface and the pressure based on the results of detection by the pressure sensors 102. In the contact position data 150B in FIG. 4, parts receiving higher pressures are shown in darker colors.

Next, referring to FIG. 5 to FIG. 8, examples of installation of the detecting unit 100 in a car will be explained.

FIG. 5 shows a first installation example. In this installation example, the detecting unit 100 is installed in a position that is on an extension of the center console and where the driver can perform the operation with his/her elbow on the arm rest. Since this enables the driver to perform the input operation with his/her elbow on the arm rest, the detecting unit 100 can be operated with stability even if the car is shaking when the input operation is performed. Moreover, since a stable input operation is possible, it never occurs that the driver's attention is fixed to the input operation, so that performing the input operation during driving does not hinder driving. Further, since the detecting unit 100 is installed on the center console, not only the driver but the person in the passenger seat or in the rear seat can perform the input operation.

FIG. 6 shows a second installation example. In this installation example, the detecting unit 100 is installed in a central part of the steering in a slanting position so as to face upward. In this installation example, since the distance between the steering and the detecting unit 100 is very short, the driver can quickly perform the input operation without largely moving the hand from the condition of driving the steering with both hands.

FIG. 7 shows a third installation example. In this installation example, the detecting unit 100 is installed in a position that is inside the door on the side of the driver seat and where the driver can perform the operation with his/her elbow on the arm rest. Since this enables the driver to perform the input operation with his/her right hand (that is, the dominant hand for many people), a more natural and stable input operation is made possible for many drivers. Moreover, contents that only the driver can operate (for example, a central controller such as an automatic window) can be operated.

FIG. 8 shows a fourth installation example. In this installation example, the detecting unit 100 is installed on the arm rest situated in the center of the rear seat. In this case, as the displaying unit 200, a display provided exclusively for passengers on the rear seat like that in FIG. 8 may be used, or a driver seat display or a passenger seat display like those in FIG. 5 to FIG. 7 may be used. According to this fourth installation example, an input operation by a passenger on the rear seat is possible. Consequently, the input device of the present invention may be used for entertainment particular to passengers on the rear seat like using the present invention as the input device of a video game machine. Moreover, since the detecting unit 100 is disposed in the center of the rear seat, two passengers on the rear seat can share the detecting unit 100.

A covering unit 130 that covers the operation surface of the detecting unit 100 may be provided as shown in FIG. 9. By this, an object other than a body part of the user can be prevented from being in contact with the operation surface; for example, a trouble can be avoided such that an object drops onto the operation surface of the detecting unit 100 to cause the apparatus to malfunction or break the sensor.

### (Displaying Unit 200)

Next, the displaying unit 200 will be explained.

The displaying unit 200 displays, on the screen, an image obtained by the combination by the image combining unit 800, and a liquid crystal display, a CRT (cathode ray tube) display, an EL (electronic luminescence) display, or the like may be used as the displaying unit 200.

The displaying unit 200 may be a display such as an HUD (head up display) or an HMD (head mounted display) that forms the image obtained by the combination by the image combining unit 800, in the air by use of a half mirror, a mirror, a lens, or the like. In this case, the image can be displayed in a position where the displaying unit 200 is difficult to install such as an upper part of the front hood of a vehicle.

Moreover, a projector may be used as the displaying unit 200. In this case, since the image obtained by the combination by the image combining unit 800 is projected onto a screen by the projector, large-screen display can be realized inexpensively.

As described above, the structure of the displaying unit 200 is selected as appropriate according to the place of installation and the purpose of the display.

Next, the units in the calculating unit 300 will be explained.

### (Body Position Displaying Unit 600)

First, the body position displaying unit 600 will be explained.

The body position displaying unit 600 obtains, through the controlling unit 400, the contact position data (150A in FIG. 3 or 150B in FIG. 4) outputted from the detecting unit 100, forms an image indicating the area of contact of the user's body with the detecting unit 100 (hereinafter, referred to as contact area image) based on the contact position data, and outputs the formed image to the controlling unit 400. Hereinafter, a contact area image forming method in the body position displaying unit 600 will be concretely explained.

As the method of displaying the area of contact of the user's body with the detecting unit 100 on the screen of the displaying unit 200, two methods are considered. The first one is to display the contact area shape itself as the contact area image, and the second one is to estimate the position and the shape of the user's hand placed on the detecting unit 100 from the shape of the contact area, create a hand shape model based on the estimation result, and display the image of the created hand shape model (7 in FIG. 1) as the contact area image. These methods will be explained in order.

First, the case where the contact area shape itself is displayed as the contact area image will be explained with reference to FIG. 10A to FIG. 12B.

First, referring to FIG. 10A and FIG. 10B, a first concrete example of the case where the contact area shape itself is displayed as the contact area image will be explained. FIG. 10A shows detection results (binary) of the capacitive sensors 101 when a hand of the user is placed on the operation surface of the detecting unit 100 having 600 (20x30) capacitive sensors 101. The number of capacitive sensors 101 (that is, the resolution of the detecting unit 100) is merely an example, and the present invention is not limited thereto. From the detecting unit 100, the detection results of the capacitive sensors 101 of FIG. 10A are outputted as the contact position data. The body position displaying unit 600 forms, based on the contact position data, a contact area image in which dots of a predetermined size are arranged in the positions corresponding to the capacitive sensors 101 detecting the contact (or the approach) of the hand as shown in FIG. 10B. The contact area image formed in this manner is combined with the display information by the processing by the image combining unit 800 described later, and is displayed on the displaying unit 200 . Since such a display enables the user to confirm the positions of the capacitive sensors 101 situated below his/her hand on the screen, an input operation such as a double tapping operation on a specific capacitive sensor 101 can be performed. Thus, this example is effective particularly when a fine input operation such as selecting a fine GUI part is required.

Next, referring to FIG. 11A and FIG. 11B, a second concrete example of the case where the contact area shape itself is displayed as the contact area image will be explained. FIG. 11A shows detection results (binary) of the capacitive sensors 101 when a hand of the user is placed on the operation surface of the detecting unit 100 having 600 (20x30) capacitive sensors 101 like FIG. 10A. The number of capacitive sensors 101 (that is, the resolution of the detecting unit 100) is merely an example, and the present invention is not limited thereto. From the detecting unit 100, the detection results of the capacitive sensors 101 of FIG. 11A are outputted as the contact position data. The body position displaying unit 600 forms a contact area image close to the shape of the actual contact area like FIG. 11B based on the contact position data. Specifically, of the capacitive sensors 101 detecting the contact (or the approach) of the hand, adjoining ones are regarded as one group, and the shape of this group is approximated to a given figure (for example, an ellipse). Alternatively, a contact area image close to FIG. 11B may be formed by filling the space among adjoining dots in the contact area image of FIG. 10B. Such a display enables the user to intuitively grasp the shape of the contact area, which causes little discomfort. As display variations, the following may be performed: displaying only the outline of the contact area; pasting a predetermined texture to the contact area; or varying the color or the transparency of the contact area according to the area of contact.

Next, referring to FIG. 12A and FIG. 12B, a third concrete example of the case where the contact area shape itself is displayed as the contact area image will be explained. FIG. 12A shows detection results (multiple value) of the pressure sensors 102 when a hand of the user is placed on the operation surface of the detecting unit 100 having 600 (20×30) pressure sensors 102. The number of pressure sensors 102 (that is, the resolution of the detecting unit 100) is merely an example, and the present invention is not limited thereto. From the detecting unit 100, the detection results of the pressure sensors 102 of FIG. 12A are outputted as the contact position data. The body position displaying unit 600 arranges dots of a predetermined size in the positions corresponding to the pressure sensors 102 detecting the pressures like FIG. 12B, based on the contact position data, and forms a contact area image in which the higher the pressures detected by the pressure sensors 102 are, the darker the colors of the dots corresponding to the pressure sensors 102 are . Since such a display enables the user to confirm the positions of the pressure sensors 102 situated below his/her hand on the screen, an input operation such as the double tapping operation of a specific pressure sensor 102 can be performed. Thus, this example is effective particularly when a fine input operation such as selecting a fine GUI part is required. Moreover, since the pressures detected by the pressure sensors 102 can be confirmed on the screen, the user can grasp how much force is required when the pushing operation is performed and which part of the fingertip applies the highest pressure to the operation surface. By this, for example, when a GUI part different from the target GUI part is erroneously selected, its cause (for example, a high pressure is unintentionally applied to the operation surface with the palm) can be confirmed. While the colors of the dots are varied according to the pressures in the example of FIG. 12B, the present invention is not limited thereto. For example, the sizes of the dots, the transparencies of the dots, the shapes of the dots, the presence or absence of the edge lines of the dots, the line types of the edge lines of the pixels, and the thicknesses of the edge lines of the pixels may be varied according to the pressures. Moreover, these variations may be combined.

Next, referring to FIG. 13A and FIG. 13B, a fourth concrete example of the case where the contact area shape itself is displayed as the contact area image will be explained. FIG. 13A shows detection results (multiple value) of the pressure sensors 102 when a hand of the user is placed on the operation surface of the detecting unit 100 having 600 (20×30) pressure sensors 102 like FIG. 12A. The number of pressure sensors 102 (that is, the resolution of the detecting unit 100) is merely an example, and the present invention is not limited thereto. From the detecting unit 100, the detection results of the pressure sensors 102 of FIG. 13A are outputted as the contact position data. The body position displaying unit 600 forms a contact area image close to the shape of the actual contact area like FIG. 13B based on the contact position data. Specifically, of the pressure sensors 102 detecting pressures higher than a predetermined value, adjoining ones are regarded as one group, the shape of this group is approximated to a given figure (for example, an ellipse), and further, gradation is provided in the color of the figure according to the pressures detected by the pressure sensors 102. For example, the part where the pressure is high is displayed in red, the part where the pressure is low, in blue, and the part where the pressure is intermediate therebetween, in purple. Such a display enables the user to intuitively grasp the shape of the contact area, which causes little discomfort. While the colors of the ellipses are varied according to the pressures in the example of FIG. 13B, the present invention is not limited thereto. For example, the sizes of the ellipses, the transparencies of the ellipses, the shapes of the ellipses, the presence or absence of the edge lines of the ellipses, the line types of the edge lines of the ellipses, and the thicknesses of the edge lines of the ellipses may be varied according to the pressures. Moreover, these variations may be combined.

Next, the case where the image of the hand shape model formed based on the shape of the contact area is displayed as the contact area image will be explained with reference to FIG. 14A to FIG. 16.

The body position displaying unit 600 performs hand shape modeling based on the contact position data (150A in FIG. 3 or 150B in FIG. 4) outputted from the detecting unit 100.

For the hand shape modeling, a calibration processing is necessarily performed for each user prior to the input operation by the user. This calibration processing is for characteristics of the user's hand to be reflected in a prepared hand shape model, and is necessarily performed only once before the user operates the input device. The characteristics of the user's hand (parameters such as the size and the shape of the palm, the length and the thickness of each finger, and the length from the finger tip to the first joint or the second joint) may be directly inputted to the body position displaying unit 600 by the user by use of given input means, or the following may be performed: The user presses a hand of his/hers against the operation surface of the detecting unit 100 and the characteristics are automatically recognized by the body position displaying unit 600 based on the contact position data outputted from the detecting unit 100. The characteristic parameters particular to the user obtained in this manner can be reused later by storing them in a given storage device together with the user's identification information (for example, the name) . This makes it unnecessary for the user to perform the calibration processing every time the user uses the input device.

The body position displaying unit 600 determines the position of the base of the palm and the positions of the finger tips from the contact position data outputted from the detecting unit 100, changes the shape of a prepared hand shape model 103 as shown in FIG. 14A to that shown in FIG. 10B based on the positions and the characteristics of the user's hand obtained by the calibration processing, and outputs an image of the shape-changed hand shape model to the controlling unit 400 as the contact area image.

There can be a case where the user does not make all his/her five fingers in contact with the operation surface of the detecting unit 100. For example, a case can be considered where the user makes only the forefinger and the thumb of his/her five fingers in contact with the operation surface. To cope with such a case, a plurality of patterns of hand shape models corresponding to the number of fingers that the user makes in contact or combinations thereof are prepared, and the body position displaying unit 600 determines which fingers the user makes in contact with the operation surface based on the contact position data outputted from the detecting unit 100 and creates the contact area image by use of a hand shape model corresponding to the result of the determination. For example, when the user makes only the forefinger and the thumb of his/her five fingers in contact with the operation surface, the shape of a prepared hand shape model 104 as shown in FIG. 15A based on the contact position data and the characteristics of the user's hand.

As methods of determining which fingers of the five fingers are in contact, the following methods are considered: estimating it in consideration of the contact position in the detecting unit 100; estimating it in consideration of the positions of the contact areas relative to each other; and estimating it in consideration of the history of the transition of the contact position. The hand shape model selection may be made according only to the number of fingers in contact without identifying which fingers of the five fingers are in contact. For example, when only one finger is in contact, a hand shape model such that only the forefinger is stretched may be used irrespective of whether the finger is actually the forefinger or not.

There can be a case where the user makes only his/her fingers in contact with the operation surface of the detecting unit 100. In this case, the body position displaying unit 600 estimates the position of the palm from the contact positions of the fingertips in consideration of the direction from which the user performs the input operation on the detecting unit 100. For example, in the example of FIG. 7, since it is assumed that the user performs the input operation with his/her elbow on the arm rest, the user's palm is considered to be always situated in the direction of the rear seat with respect to the positions of the fingertips. The body position displaying unit 600 creates an image of the hand shape model based on the estimated position of the palm, the contact position data, and the characteristics of the user's hand.

The following may be performed: A plurality of infrared sensors 110 are arranged on a part of the edge of the operation surface of the detecting unit 100 or so as to surround the entire area of the operation surface as shown in FIG. 16 and whether a human body is present above the infrared sensors 110 is detected. By considering the detection results of these infrared sensors 110, the body position displaying unit 600 can easily determine the orientation of the user's hand even when the user does not make the palm in contact with the operation surface of the detecting unit 100. It can also be detected that the user' s hand is situated in a position away from the operation surface above the detecting unit 100.

There can be a case where the user makes only his/her palm in contact with the operation surface of the detecting unit 100. In this case, the body position displaying unit 600 displays an image of a hand shape model of an opened hand. Further, it may be indicated to the user that the fingertips are not in contact with the operation surface by making the image of the hand shape model semitransparent. Such a display enables the user to easily grasp the condition of his/her hand from the image displayed on the displaying unit 200, which puts the user at ease.

When neither the fingertips nor the palm is in contact with the operation surface of the detecting unit 100, the body position displaying unit 600 does not create the contact area image. Thereby, the user can easily grasp the condition of his/her hand (that is, that the hand is separated from the operation surface) from the image displayed on the displaying unit 200, and can feel at ease.

### (Operation Content Determining Unit 500)

Next, the operation content determining unit 500 will be explained.

The operation content determining unit 500 obtains, through the controlling unit 400, the contact position data outputted from the detecting unit 100, detects a specific input operation by the user based on the contact position data, and outputs the result to the controlling unit 400. Examples of the specific input operation detected by the operation content determining unit 500 include: an operation of pushing the operation surface (hereinafter, referred to as pushing operation); an operation of sliding, for example, a finger while pushing the operation surface with the finger; an operation of touching a point on the operation surface for a predetermined period of time or more (hereinafter, referred to as holding operation) ; an operation of touching a point on the operation surface for only a moment (hereinafter, referred to as tapping operation); and an operation of touching a point on the operation surface twice in a short period of time (hereinafter, referred to as double tapping operation). To detect the holding operation, the tapping operation, and the double tapping operation, since the change with time of the contact position is necessarily considered, it is necessary to hold the time and the history of the contact of the body part with each point on the operation surface as appropriate.

While the pushing operation can be easily detected by comparing the pressures detected by the pressure sensors with a predetermined threshold value when the pressure sensors 102 are used in the detecting unit 100, a contrivance is required when the capacitive sensors 101 are used in the detecting unit 100. When the capacitive sensors 101 are used in the detecting unit 100, the pushing operation can be detected, for example, by calculating the area of the region where the user's fingertip is in contact from the contact position data and monitoring the change of the area. This utilizes the fact that while the area of contact between the fingertip and the operation surface is comparatively small when the user merely places his/her hand on the operation surface, the contact area is increased to approximately 1.2 times to twice when the user presses the fingertip against the operation surface.

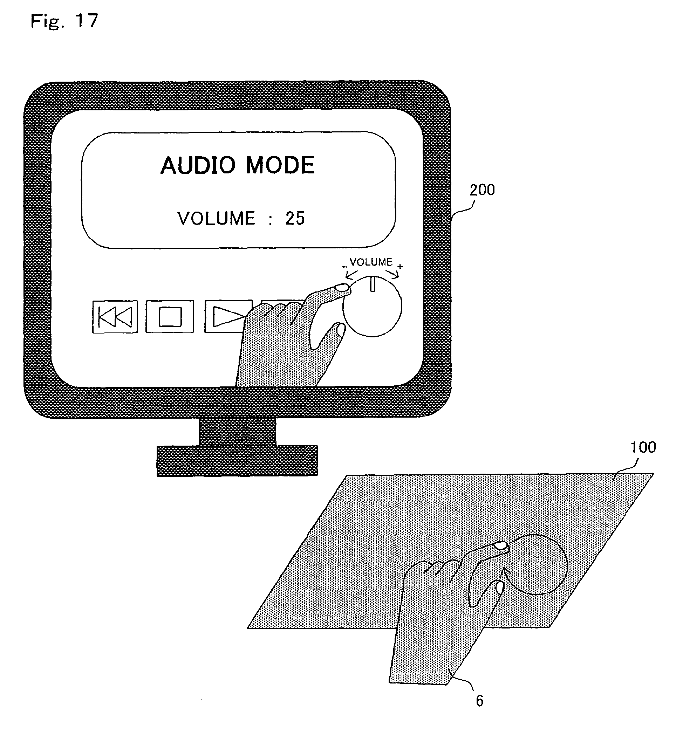

The following may be performed: For example, a rotary switch for volume control is simulatively displayed with a GUI part on the displaying unit 200 as shown in FIG. 17 and when a dragging operation such as drawing a circle on the operation surface of the detecting unit 100 is detected by the operation content determining unit 500, the volume is changed according to the dragging operation. This enables an intuitive input operation as if to actually turn a rotary switch.

### (Controlling Unit 400)

Next, the controlling unit 400 will be explained.

The processings by the controlling unit 400 are roughly divided into: a processing executed to display, on the displaying unit 200, the contact area image indicating the area of contact of the user' s body part with the operation surface of the detecting unit 100; and a processing executed when an input operation by the user is present.

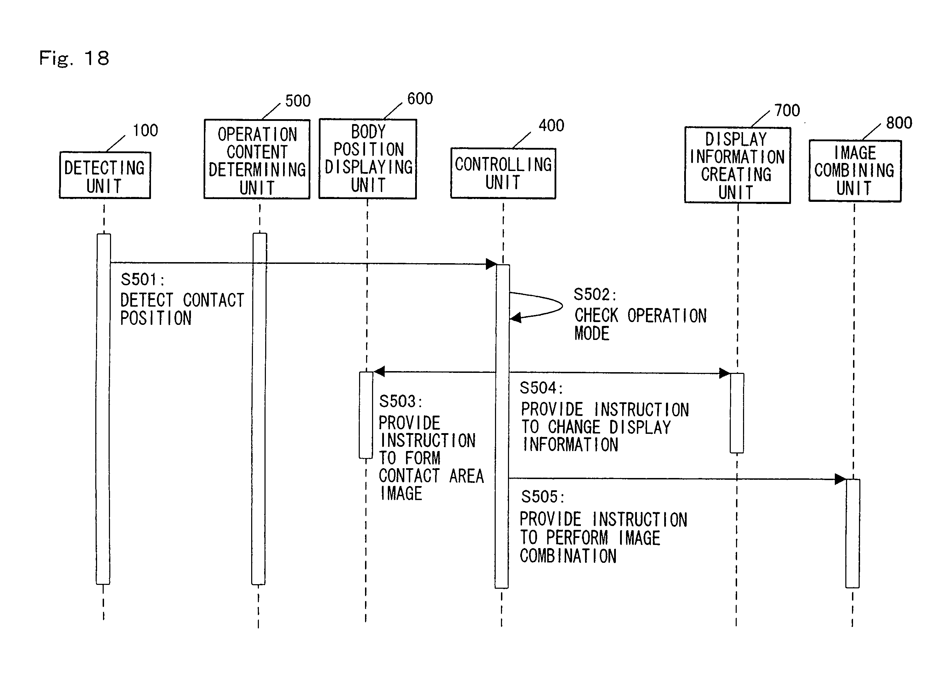

First, the flow of the processing by the controlling unit 400 executed to display the contact area image on the displaying unit 200 will be explained with reference to the sequence view of FIG. 18.

At step S501, when the detecting unit 100 detects the position of contact (approach) of the user's body part with the operation surface, the detecting unit 100 transmits the detected position data to the controlling unit 400.

At step S502, the controlling unit 400 checks the operation mode at that point of time. Here, the following two modes are prepared as the operation modes: a mode in which the input operation by the user is permitted; and a mode in which the input operation by the user is inhibited. Particularly, in car navigation systems, since it leads to danger that the driver operates the car navigation system while driving, it is normal that the input operation by the user is inhibited during driving. When it is determined that the input operation by the user is not permitted by the check at step S502, the controlling unit 400 instructs the image combining unit 800 to output, to the displaying unit 200, the display information created by the display information creating unit 700, as it is (without combining the display information and the contact area image with each other).

When it is determined that the input operation by the user is permitted by the check at step S502, at step S503, the controlling unit 400 instructs the body position displaying unit 600 to create the contact area image, and at step S504, instructs the display information creating unit 700 to change the display information to be displayed on the displaying unit 200. When necessary, the controlling unit 400 may detect characteristics related to the body part placed on the operation surface of the detecting unit 100 (the size of the hand, whether the left hand or the right hand, etc.) and transmit the characteristics to the display information creating unit 700. The explanation of the contact area image forming processing in the body position displaying unit 600 is omitted because the processing is as described above. The body position displaying unit 600 forms an image of the hand shape model based on the contact position data as the contact area image.

The display information creating unit 700 changes the display information according to the instruction of the controlling unit 400. Examples of the change of the display information by the display information creating unit 700 will be described below.

FIG. 19A and FIG. 19B show a first example in which the display information is changed between when the detecting unit 100 detects the contact position (that is, when a body part of the user is placed on the operation surface of the detecting unit 100) and when the detecting unit 100 does not detect the contact position (that is, when a body part of the user is not placed on the operation surface of the detecting unit 100). Whether the detecting unit 100 detects the contact position can be determined by the controlling unit 400 based on the contact position data outputted from the detecting unit 100. The controlling unit 400 instructs the display information creating unit 700 to change the display information based on the result of the determination.
FIG. 19A shows a screen display example when the detecting unit 100 does not detect the contact position. In this example, the edges of the GUI parts (in this example, buttons) selectable by the user are displayed with a line type the same as that of a box merely for message display in which a message "24 min. to destination" is shown. FIG. 19B shows a screen display example corresponding to FIG. 19A when the detecting unit 100 detects the contact position. In this example, since the buttons are displayed stereoscopically, the user can recognize at a glance where is the area to be selected. By changing the display information as described above, when the user does not intend to perform the input operation, the viewability of the display information can be improved by simplifying the display information, and when the user intends to perform the input operation, operability can be improved by highlighting the object to be selected.

FIG. 20A and FIG. 20B show a second example in which the display information is changed between when the detecting unit 100 detects the contact position (that is, when a body part of the user is placed on the operation surface of the detecting unit 100) and when the detecting unit 100 does not detect the contact position (that is, when a body part of the user is not placed on the operation surface of the detecting unit 100) . FIG. 20A shows another screen display example when the detecting unit 100 does not detect the contact position. In this example, the GUI parts (in this example, buttons) selectable by the user are displayed in a comparatively small size. FIG. 20B shows a screen display example corresponding to FIG. 20A when the detecting unit 100 detects the contact position. In this example, since the buttons are displayed in a size larger than that in FIG. 20A, the button selection by the user is facilitated. By changing the display information as described above, operability can be improved by increasing the visibility of the information other than the buttons when the user is not going to perform the input operation and by enlarging the buttons when the user is going to perform the input operation.

FIG. 21A and FIG. 21B show an example in which the display information is changed between when the right hand is placed on the operation surface of the detecting unit 100 and when the left hand is placed thereon. Whether the right hand or the left hand is placed on the operation surface of the detecting unit 100 may be determined by the controlling unit 400 based on the contact position data outputted from the detecting unit 100 or may be determined in the calibration processing. For this determination, various existing algorithms may be used. The controlling unit 400 instructs the display information creating unit 700 to change the display information based on the result of the determination. FIG. 21A shows a screen display example when the right hand is placed on the operation surface of the detecting unit 100, and FIG. 21B shows a screen display example when the left hand is placed on the operation surface of the detecting unit 100. In this example, a situation is assumed that like when the detecting unit 100 is installed between the driver seat and the passenger seat in a car, two users are present on both of the right and the left sides of the detecting unit 100, the user present on the right side of the detecting unit 100 operates the detecting unit 100 with his/her left hand, and the user present on the left side of the detecting unit 100 operates the detecting unit 100 with his/her right hand.
That is, when the right hand is placed on the operation surface of the detecting unit 100, it is considered that the user operating the detecting unit 100 is present on the left side of the detecting unit 100. At this time, if the GUI parts (in this example, buttons) are displayed in the upper right corner of the screen, when the user tries to push the button, a part near the center of the detecting unit 100 is covered with the user's palm, and as a consequence, the part near the center is covered with the image of the hand shape model, which decreases the visibility of the screen. To avoid such a problem, when the right hand is placed on the operation surface of the detecting unit 100, the buttons are displayed on the left side of the screen like FIG. 21A, and conversely, when the left hand is placed on the operation surface of the detecting unit 100, the buttons are displayed on the right side of the screen like FIG. 21B.

While in the example, the positions where the buttons are disposed are changed between when the right hand is placed on the operation surface of the detecting unit 100 and when the left hand is placed on the operation surface of the detecting unit 100, the function, the shape, the size, and the number of the buttons may be changed. For example, when the detecting unit 100 is installed between the driver seat and the passenger seat of a right-hand drive car, the following is considered: When the right hand (that is, the hand of the passenger on the passenger seat) is placed while the vehicle is moving, buttons requiring a comparatively complicated input operation such as character input and buttons requiring a comparatively easy input operation such as screen scrolling are both displayed, and when the left hand (that is, the driver's hand) is placed while the vehicle is moving, for safety, only the buttons requiring a comparatively easy input operation are displayed. Likewise, when the detecting unit 100 is installed between the driver seat and the passenger seat of a left-hand drive car, the following is considered: When the left hand (that is, the hand of the passenger on the passenger seat) is placed while the vehicle is moving, buttons requiring a comparatively complicated input operation such as character input and buttons requiring a comparatively easy input operation such as screen scrolling are both displayed, and when the right hand (that is, the driver's hand) is placed while the vehicle is moving, only the buttons requiring a comparatively easy input operation are displayed.

FIG. 22A and FIG. 22B show an example in which the display information is changed between when a comparatively large hand (that is, an hand of an adult) is placed on the operation surface of the detecting unit 100 and when a comparatively small hand (that is, a hand of a child) is placed thereon. Whether a comparatively large hand or a comparatively small hand is placed on the operation surface of the detecting unit 100 may be determined by the controlling unit 400 based on the contact position data outputted from the detecting unit 100 or may be determined in the calibration processing. For this determination, various existing algorithms may be used. The controlling unit 400 instructs the display information creating unit 700 to change the display information based on the result of the determination. FIG. 22A shows a screen display example when a comparatively large hand is placed on the operation surface of the detecting unit 100. When a comparatively large hand is placed on the operation surface of the detecting unit 100, since it is considered that an adult intends to operate the detecting unit 100, the input operation is not specifically limited. FIG. 22B shows a screen display example when a comparatively small hand is placed on the operation surface of the detecting unit 100. when a comparatively small hand is placed on the operation surface of the detecting unit 100, since it is considered that a child intends to operate the detecting unit 100, some or all the buttons are disabled to thereby limit the input operation, and further, the color of the buttons is changed or a mark is placed to indicate to the user that the buttons are invalidated.

While in the example, the color of the buttons is changed or a mark is placed when a comparatively small hand is placed on the operation surface of the detecting unit 100, the present invention is not limited thereto, and various display information change examples are considered. For example, it is considered to change difficult words included in the display information, to easy ones and change the screen structure and the color scheme to childish ones.

As another display information change example, the display information creating unit 700 may create the display information only when it is determined that a body part of the user is placed on the operation surface. By this, the processing associated with the image display is intermitted when the user is not performing the input operation, so that power consumption can be suppressed. Likewise, the display information creating unit 700 may create the display information only when it is determined that the user's right hand (or left hand) is placed on the operation surface. Likewise, the display information creating unit 700 may create the display information only when it is determined that an adult's hand (or a child's hand) is placed on the operation surface.

The object placed on the operation surface of the detecting unit 100 is not always a body part of the user. Therefore, the controlling unit 400 may determine whether the object placed on the operation surface of the detecting unit 100 is a body part of the user, based on the contact position data from the detecting unit 100, and change the display information between when it is a body part and when it is not (for example, when it is baggage) . For example, it may be performed that when it is determined that the object placed on the operation surface of the detecting unit 100 is not a body part, the display information creating unit 700 does not create the display information. The determination as to whether the object placed on the operation surface of the detecting unit 100 is a body part of the user can be made by a method such as pattern matching.

When the display information is changed, at step S505, the controlling unit 400 instructs the image combining unit 800 to combine the contact area image formed by the body position displaying unit 600 with the display information created (changed) by the display information creating unit 700. In response to this instruction, the image combining unit 800 combines the contact area image and the display information with each other. Examples of the image obtained by the combination by the image combining unit 800 will be explained below.

FIG. 23A shows a screen example when the contact area image formed by the body position displaying unit 600 (in this example, an image of a real hand shape model) is superimposed on the display information created by the display information creating unit 700. Displaying such a real hand shape model image like this can make the user to feel as if he/she actually touched the screen, which enables an intuitive input operation.

FIG. 23B shows a screen example when only the outline of the contact area image formed by the body position displaying unit 600 is superimposed on the display information created by the display information creating unit 700. By such an image combination, the display information inside the contact area image is displayed simultaneously with the display of the shape and the position of the contact area, so that the confirmation of the display information during operation is facilitated.

FIG. 23C shows a screen example when the real hand shape model image formed by the body position displaying unit 600 is superimposed on the display information created by the display information creating unit 700, after processed so that its outline is opaque and its inside is transparent. By such an image combination, an intuitive input operation is made possible, and the confirmation of the display information during operation is facilitated.

FIG. 23D shows a screen example when the outline of the contact area image formed by the body position displaying unit 600 is superimposed on the display information created by the display information creating unit 700, after processed so that the part of the fingertip is highlighted. By such an image combination, the position that the user intends to push can be quickly confirmed and the display information inside the contact area image is also displayed, so that the confirmation of the display information during operation is facilitated. As the method of detecting the part of the fingertip, methods are considered such as identifying the part of the fingertip from the shape of the outline by using pattern matching and extracting the part of the nail from the hand shape model. Examples of the highlighting include: placing a mark; changing the color; changing the transparency; gradually increasing the darkness of the color of the outline toward the fingertip; and gradually decreasing the transparency of the outline toward the fingertip. Further, the part of the fingertip of the hand shape model may be highlighted by combining at least the part of the fingertip of the image of FIG. 10B (or FIG. 11B, FIG. 12B, FIG. 13B) when the hand shape model (or its outline) formed by the body position displaying unit 600 and the display information created by the display information creating unit 700 are combined with each other by the image combining unit 800.

FIG. 23E shows a screen example when the contact area image formed by the body position displaying unit 600 is superimposed on the display information created by the display information creating unit 700, after a semitransparent or opaque shade is added thereto. Such a display combination can make the user feel as if he/she actually touched the screen.

While in the examples of FIG. 23A to FIG. 23E, the contact area image is processed as required before it is superimposed on the display information created by the display information creating unit 700, it is considered to process an element other than the contact area image in the image combination. Examples of such cases will be explained below.

FIG. 23F shows an example in which for GUI parts such that some or all of them are hidden when the contact area image formed by the body position displaying unit 600 is superimposed on the display information, auxiliary information (information such as the labels of the GUI parts or auxiliary explanation) are pop-up displayed near the GUI parts. To realize this display, first, the image combining unit 800 determines whether each GUI part included in the display information created by the display information creating unit 700 overlaps the contact area image by use of a known algorithm. When a GUI part overlapping the contact area image is present, an area is found that is present away from the position of the GUI part in a predetermined direction (rightward, leftward, etc.) and does not overlap the contact area image, and the auxiliary information of the GUI part is displayed in the area. Such an image combination enables the user to easily obtain the information on an arbitrary GUI part displayed on the screen by superimposing the contact area image on the GUI part. In addition, the GUI parts hidden by the contact area image can be identified without the hand being moved, so that operability is improved.

FIG. 23G shows an example in which for GUI parts such that some or all of them are hidden when the contact area image formed by the body position displaying unit 600 is superimposed on the display information, the labels of the GUI parts are superimposed on the contact area image. While in the example of FIG. 23G, the labels of the hidden GUI parts are superimposed on the contact area image, the shapes of the hidden GUI parts may also be superimposed thereon. Such an image combination enables the user to identify the GUI parts hidden by the contact area image without moving the hand, so that operability is improved.

FIG. 23H shows an example in which the GUI part overlapping the part of the fingertip of the contact area image is highlighted when the contact area image formed by the body position displaying unit 600 is superimposed on the display information. Such an image combination enables the user to easily confirm on which GUI part the fingertip of the contact area image is situated. As the method of detecting the position of the fingertip, methods are considered such as identifying the part of the fingertip from the shape of the outline by use of pattern matching and extracting the part of the nail from the hand shape model. The highlighting may be performed by various methods such as changing the color, changing the transparency, changing the shape, changing the line type or the line thickness, changing the character format, changing the icon, or continuously changing (gradation) the color or the transparency.

While in the example, when it is determined that the input operation by the user is not permitted by the check at step S502, the controlling unit 400 instructs the image combining unit 800 to output the display information created by the display information creating unit 700 as it is to the displaying unit 200, the present invention is not limited thereto. That is, the image combination method in the image combining unit 800 may be changed according to the current operation mode. More specifically, the following may be performed: in the mode in which the input operation by the user is permitted, the contact area image is displayed semitransparently, is displayed with its outline highlighted, or displayed semitransparently with its outline highlighted, and in the mode in which the input operation by the user is disabled, the display image and the contact area image are combined with each other so that the contact area image is displayed semitransparently.

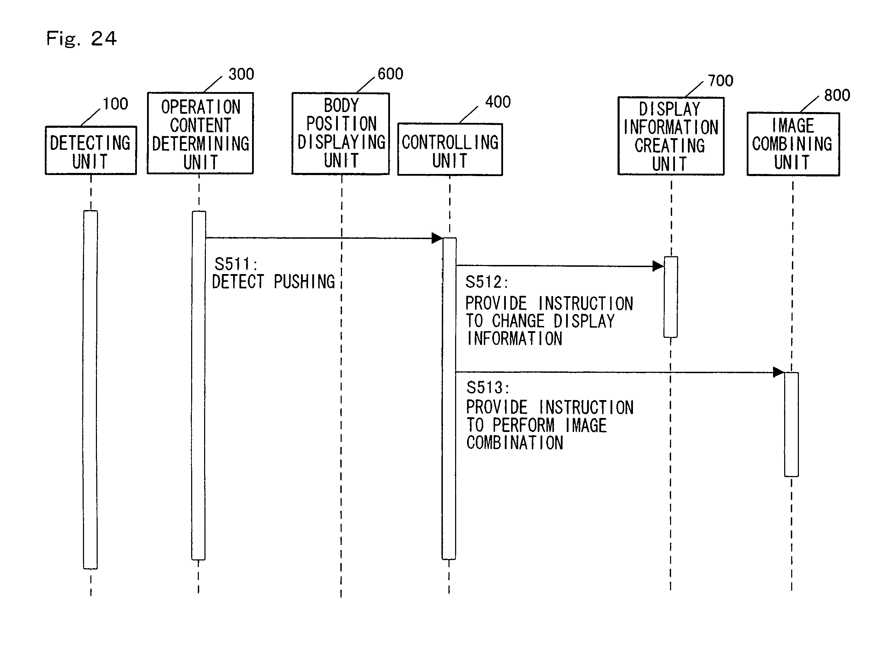

Next, the flow of the processing by the controlling unit 400 executed when a specific input operation (in this example, a pushing operation) by the user is present will be explained with reference to the sequence of FIG. 24.

At step S511, when detecting a pushing operation by the user, the operation content determining unit 500 transmits a message to the controlling unit 400.

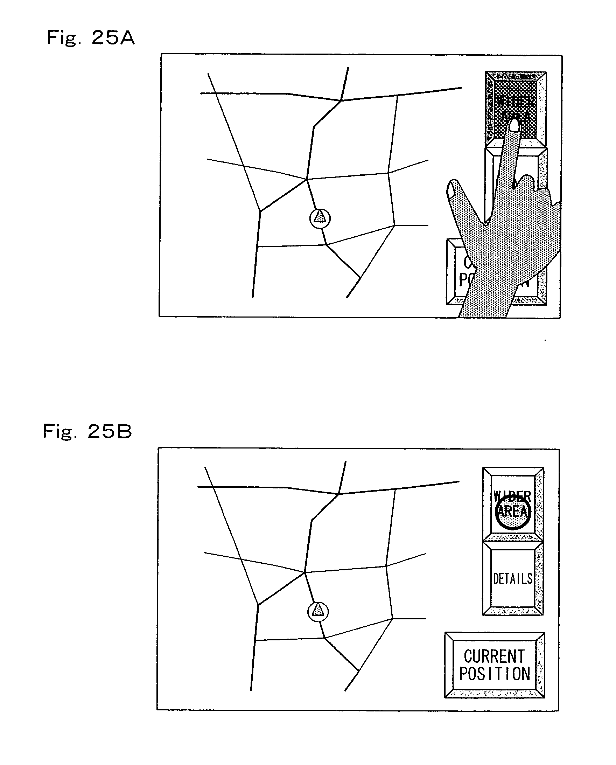

At step S512, the controlling unit 400 instructs the display information creating unit 700 to change the display information. The display information creating unit 700 changes the display information according to the instruction of the controlling unit 400. Examples of the display information change at this step will be explained by use of FIG. 25A and FIG. 25B.

FIG. 25A shows an example in which the GUI part corresponding to the point, on the detecting unit 100, that the user pushes (that is, the GUI part selected by the user) is highlighted. In the example of FIG. 25A, the GUI part (in this example, a button) selected by the user is changed to an image of a button that looks like being pushed down. While the contact area image is shown in FIG. 25A for convenience' sake, in actuality, the contact area image is not included in the display information created by the display information creating unit 700. Such a change of the display information enables the user to easily confirm whether the GUI part that he/she intends to select is correctly selected, so that operability is improved.

FIG. 25B shows an example in which the point, on the screen, corresponding to the point, on the detecting unit 100, pushed by the user is highlighted. In the example of FIG. 25B, a circular mark is superimposed on the point, on the screen, corresponding to the point, on the detecting unit 100, pushed by the user as if a fingerprint were left. This circular mark is displayed until a predetermined period of time has elapsed since the mark is displayed or until the user pushes another point on the detecting unit 100. Such a change of the display information enables the user to easily confirm whether the point that he/she intends to select is correctly selected. In particular, when the point that the user intends to specify and the actually specified point are shifted from each other, the direction and the distance of the shift can be confirmed.

When the display information is changed, at step S513, the controlling unit 400 instructs the image combining unit 800 to combine the contact area image formed by the body position displaying unit 600 and the display information created by the display information creating unit 700 with each other. In response to this instruction, the image combining unit 800 combines the contact area image and the display information with each other.

As described above, according to the input device of the present embodiment, the user can perform an intuitive input operation using a GUI without directly touching the screen and further, without looking at the hand.

### INDUSTRIAL APPLICABILITY

The input device of the present invention is structured so that an intuitive input operation such as that of a touch panel display can be performed without directly touching the screen, and is suitable for when the input operation is performed in a position away from the display and when a far-focus display is used as the displaying means. The input device of the present invention is also suitable for use as the input device for car navigation systems since it is unnecessary to look at the hand at the time of the input operation.

## Claims

1. An input device for a user to input an instruction or information to an apparatus, the input device comprising:
a detecting unit that has an operation surface, detects an area in contact with or close to a body part of the user on the operation surface, and outputs contact position data indicating the area;
an operation content determining unit that detects a specific input operation by the user based on the contact position data;
a body position displaying unit that forms a contact area image corresponding to the area in contact with or close to the body part of the user on the operation surface of the detecting unit, based on the contact position data;
a display information creating unit that creates a display image that assists the user in performing an operation;
an image combining unit that combines the contact area image formed by the body position displaying unit and the display image created by the display information creating unit with each other; and
a displaying unit that displays the image obtained by the combination by the image combining unit.

2. The input device according to claim 1, wherein the detecting unit is a contact type coordinate input device.

3. The input device according to claim 1, wherein the detecting unit includes a plurality of capacitive sensors arranged along the operation surface.

4. The input device according to claim 3, wherein the body position displaying unit forms a contact area image comprising dots corresponding to the capacitive sensors of the detecting unit .

5. The input device according to claim 3, wherein the body position displaying unit forms a contact area image comprising, of dots corresponding to the capacitive sensors of the detecting unit, adjoining dots approximated to one figure.

6. The input device according to claim 1, wherein the detecting unit includes a plurality of pressure sensors arranged along the operation surface.

7. The input device according to claim 6, wherein the contact position data includes pressure values detected by the pressure sensors of the detecting unit, and
the body position displaying unit forms a contact area image corresponding to the pressure values detected by the pressure sensors of the detecting unit, based on the contact position data.

8. The input device according to claim 7, wherein colors of parts of the contact area image formed by the body position displaying unit are varied according to the pressure values detected by the pressure sensors of the detecting unit.

9. The input device according to claim 1, further comprising a covering unit that covers the operation surface of the detecting unit.

10. The input device according to claim 1, wherein the body position displaying unit performs modeling of a shape of the body part of the user placed on the operation surface of the detecting unit based on a previously held body shape pattern and the contact position data outputted from the detecting unit, and forms an image of a body shape model obtained as a result of the modeling, as the contact area image.

11. The input device according to claim 10, wherein the body position displaying unit performs a calibration processing to obtain a characteristic of the body part of the user based on the contact position data outputted from the detecting unit, and performs the modeling of the shape of the body part of the user based on a result of the calibration processing.

12. The input device according to claim 10, further comprising a non-contact type position detecting sensor such as an infrared sensor near the detecting unit.

13. The input device according to claim 10, wherein the image combining unit combines only an outline of the body shape mode with the display image created by the display information creating unit.

14. The input device according to claim 10, wherein the image combining unit changes transparency of the body shape model when the contact area image formed by the body position displaying unit and the display image formed by the body information creating unit are combined with each other.

15. The input device according to claim 10, wherein the image combining unit highlights an outline of the body shape model when the contact area image formed by the body position displaying unit and the display image formed by the body information creating unit are combined with each other.

16. The input device according to claim 10, wherein the image combining unit highlights a part of a fingertip of the body shape model when the contact area image formed by the body position displaying unit and the display image formed by the body information creating unit are combined with each other.

17. The input device according to claim 16, wherein the detecting unit includes a sensor group comprising a plurality of capacitive sensors or pressure sensors arranged along the operation surface, and
the image combining unit highlights the part of the fingertip of the body shape model by use of an image comprising dots corresponding to the sensors of the sensor group when the contact area image formed by the body position displaying unit and the display image formed by the body information creating unit are combined with each other.

18. The input device according to claim 16, wherein the detecting unit includes a sensor group comprising a plurality of capacitive sensors or pressure sensors arranged along the operation surface, and
the image combining unit highlights the part of the fingertip of the body shape model by use of an image comprising, of dots corresponding to the sensors of the sensor group, adjoining dots approximated to one figure when the contact area image formed by the body position displaying unit and the display image formed by the body information creating unit are combined with each other.

19. The input device according to claim 10, wherein the image combining unit pop-up displays display information in the display image hidden by the body shape model, in an area not hidden by the body shape model when the contact area image formed by the body position displaying unit and the display image formed by the body information creating unit are combined with each other.

20. The input device according to claim 10, wherein the image combining unit displays display information in the display image hidden by the body shape model in front of the body shape model when the contact area image formed by the body position displaying unit and the display image formed by the body information creating unit are combined with each other.

21. The input device according to claim 10, wherein the image combining unit highlights display information in the display image overlapping a part of a fingertip of the body shape model when the contact area image formed by the body position displaying unit and the display image formed by the body information creating unit are combined with each other.

22. The input device according to claim 21, wherein the image combining unit highlights the display information, in the display image, overlapping the part of the fingertip by enlarging the display information, changing a color of the display information, or by changing the display information so as to look stereoscopic.

23. The input device according to claim 1, wherein the display information creating unit changes a display image to be formed, according to the contact position data outputted from the detecting unit.

24. The input device according to claim 23, further comprising a controlling unit that determines whether the body part of the user is in contact with or close to the operation surface of the detecting unit based on the contact position data outputted from the detecting unit,
wherein the display information creating unit forms the display image only when the controlling unit determines that the body part of the user is in contact with or close to the operation surface of the detecting unit based on the contact position data outputted from the detecting unit.

25. The input device according to claim 23, further comprising a controlling unit that determines whether the body part of the user is in contact with or close to the operation surface of the detecting unit based on the contact position data outputted from the detecting unit,
wherein the display information creating unit highlights a GUI part in the display image to be formed, when the controlling unit determines that the body part of the user is in contact with or close to the operation surface of the detecting unit based on the contact position data outputted from the detecting unit.

26. The input device according to claim 1, further comprising character detecting means for detecting a character of the body part of the user in contact with or close to the operation surface of the detecting unit based on the contact position data outputted from the detecting unit,
wherein the display information creating unit changes the display image to be formed, according to the characteristic of the body part of the user detected by the character detecting means.

27. The input device according to claim 26, wherein the character detecting means determines whether the body part of the user in contact with or close to the operation surface of the detecting unit is a right hand or a left hand based on the contact position data outputted from the detecting unit, and
the display information creating unit changes the display image to be formed, according to a result of the determination by the character detecting means.

28. The input device according to claim 27, wherein the display information creating unit creates display information only when the body part of the user in contact with or close to the operation surface of the detecting unit is a right hand or a left hand.

29. The input device according to claim 27, wherein the display information creating unit highlights a GUI part in the display image to be formed, change a position of the GUI part, or changes validity of the GUI part when the body part of the user in contact with or close to the operation surface of the detecting unit is a right hand or a left hand.

30. The input device according to claim 26, wherein the character detecting means determines whether the body part of the user in contact with or close to the operation surface of the detecting unit is a body part of an adult or a body part of a child based on the contact position data outputted from the detecting unit, and
the body position displaying unit changes the display image to be formed, according to a result of the determination by the character detecting means.

31. The input device according to claim 30, wherein the display information creating unitcreatesdisplayinformation only when the body part of the user in contact with or close to the operation surface of the detecting unit is a body part of an adult or a body part of a child.

32. The input device according to claim 30, wherein the display information creating unit highlights a GUI part in the display image to be formed, change a position of the GUI part, or changes validity of the GUI part when the body part of the user in contact with or close to the operation surface of the detecting unit is a body part of an adult or a body part of a child.

33. The input device according to claim 1, wherein the input device has two operation modes: a mode in which an input operation by the user is enabled and a mode in which the input operation by the user is disabled, and
in the mode in which the input operation by the user is enabled, the image combining unit displays the display image formed by the display information creating unit as it is, on the displaying unit without combining the display image with the contact area image.

34. The input device according to claim 1, wherein the input device has two operation modes: a mode in which an input operation by the user is enabled and a mode in which the input operation by the user is disabled, and
the image combining unit changes a method of combining the display image formed by the display information creating unit and the contact area image with each other, according to the operation mode.

35. The input device according to claim 34 , wherein the image combining unit combines the display image and the contact area image so that the contact area image is displayed semitransparently, is displayed with its outline highlighted, or is displayed semitransparently with its outline highlighted in the mode in which
the input operation by the user is enabled, and so that the contact area image is displayed opaquely in the mode in which the input operation by the user is disabled.

36. The input device according to claim 1, wherein the displaying unit is a projector that projects an image onto a screen.

37. A vehicle comprising: a detecting unit that has an operation surface, detects an area in contact with or close to a body part of a user on the operation surface, and outputs contact position data indicating the area;
an operation content determining unit that detects a specific input operation by the user based on the contact position data;
a body position displaying unit that forms a contact area image corresponding to the area in contact with or close to the body part of the user on the operation surface of the detecting unit, based on the contact position data;
a display information creating unit that creates a display image that assists the user in performing an operation;
an image combining unit that combines the contact area image formed by the body position displaying unit and the display image created by the display information creating unit with each other; and
a displaying unit that displays the image obtained by the combination by the image combining unit.

38. The vehicle according to claim 37, wherein the detecting unit is installed on a left side or a right side of a driver seat, and installed in a position where a driver can operate the detecting unit with his/her elbow on an arm rest.

39. The vehicle according to claim 37, wherein the detecting unit is installed on a steering.

40. The vehicle according to claim 37, wherein the detecting unit is installed in a center of a rear seat.
